# EUROPÄISCHE PATENTSCHRIFT

(11) **EP 3 336 021 B1**
(45) Veröffentlichungstag und Bekanntmachung des Hinweises auf die Patenterteilung: **19.08.2020**
(21) Anmeldenummer: 16205093.4
(22) Anmeldetag: 19.12.2016
(51) Int. Cl.: B65G 37/02, B65G 47/53, B65G 47/54, B65G 47/64, B65G 13/10, B65G 35/06, B24B 13/00, B24B 27/00, B65G 29/00

(54) **TRANSFEREINRICHTUNG FÜR EINEN TRANSPORTBEHÄLTER**
TRANSFER DEVICE FOR A TRANSPORT CONTAINER
DISPOSITIF DE TRANSFERT POUR UN CONTENEUR DE TRANSPORT

(43) Veröffentlichungstag der Anmeldung: 20.06.2018
(73) Patentinhaber: Carl Zeiss Vision International GmbH, 73430 Aalen (DE)
(72) Erfinder: Meschenmoser, Ralf, 73457 Essingen (DE); Schulz, Arne, 71229 Leonberg (DE); Klora, Dennis, 73479 Ellwangen (DE)
(74) Vertreter: Carl Zeiss AG - Patentabteilung

(56) Entgegenhaltungen:
- EP-A1- 1 375 389
- EP-A1- 3 064 455
- WO-A1-2015/173689
- JP-A- 2009 137 687
- US-A- 5 577 596
- US-A1- 2003 161 714
- US-A1- 2009 099 686
- US-A1- 2013 192 954
- US-A1- 2016 145 053
- US-B1- 6 425 477

## Beschreibung

Die Erfindung betrifft eine Verwendung einer Transfereinrichtung für einen Transportbehälter für Brillenglasrohlinge.

Bei der Brillenglasherstellung ist es bisher üblich, eine Prozesslinie aus mehreren Prozesseinrichtungen zu bilden, die von den zu bearbeitenden Brillenglasrohlingen nacheinander durchlaufen werden. Die Prozesslinie wird dann z.B. auf eine bestimme Sequenz von Prozessschritten und eine bestimmte Flächengestaltung und Veredelung des Brillenglases eingestellt.

Üblicherweise werden alle Prozesseinrichtungen und Transporteinrichtungen, welche die Brillenglasrohlinge zu den jeweiligen Prozesseinrichtungen der Prozesslinie transportieren, von einer zentralen Steuerung gesteuert. Insbesondere wird beispielsweise zentral festgelegt, welche Prozesseinrichtung welchen Brillenglasrohling in welcher Art und Weise bearbeitet.

Transporteinrichtungen zum Transport der Brillenglasrohlinge zu den jeweiligen Prozesseinrichtungen sind in einer Vielzahl an Ausführungsvarianten bekannt.

Es gibt beispielsweise Gliederkettenförderbänder wie z.B. in der WO 03/013992 A1 beschrieben. Es gibt auch Laufschienensysteme der in der DE 195 06 670 A1 beschriebenen Art. Ferner existieren Rollenfördersysteme, wie sie z.B. in der EP 1 947 035 A1 offenbart sind. Schließlich sind auch Gurt- oder Bandförderer bekannt. Eine Ausführungsvariante eines Gurt- oder Bandförderers ist z.B. der DE 20 2012 011 690 U1 zu entnehmen.

Im Allgemeinen sind nicht alle Prozesseinrichtungen einer Prozesslinie hintereinander auf einer durch eine oder mehrere Transporteinrichtungen gebildeten Transportspur aufgereiht, sondern zumindest einige dieser Prozesseinrichtungen befinden sich neben der Transportspur. Darüber hinaus gibt es im regelmäßig nicht nur eine Transportspur, sondern mehrere Transportspuren nebeneinander. Schließlich gibt es auch sich kreuzende oder abzweigende Transportspuren. Dies erfordert zum Einen die Möglichkeit des Transfers der Brillenglasrohlinge von der Transportspur, auf der sie transportiert werden, zu der jeweiligen Prozesseinrichtung, in welcher sie weiterprozessiert werden sollen und zum Anderen die Möglichkeit des Transfers der Brillenglasrohlinge von einer Transportspur zu einer benachbarten oder von einer momentan transportierenden Transportspur zu einer diese kreuzenden oder von dieser abzweigenden Transportspur. Entsprechende Transfereinrichtungen übernehmen diese Aufgabe.

Aus dem Stand der Technik ist eine Vielzahl an Transfereinrichtungen bekannt. Eine Auswahl aus dieser Vielzahl wird im Folgenden vorgestellt.

Die DE 20 2012 011 690 U1 und die WO 2013/131656 A2 beschreiben jeweils Anlagen zum Herstellen von Brillengläsern. Die entsprechenden Anlagen umfassen mehrere separate Bearbeitungseinrichtungen und Gurt- oder Bandförderer zum Transport der zu bearbeitenden Brillenglasrohlinge zu und von den Bearbeitungseinrichtungen. Die Anlage verfügt über mehrere Transportspuren, die durch Gurt- oder Bandförderer gebildet werden und die Transportspuren rechtwinklig kreuzende Transfereinrichtungen, die ebenfalls durch Gurt- oder Bandförderer gebildet werden. Die quer zu den Transportspuren angeordneten die Transfereinrichtung bildenden Gurt- oder Bandförderer sind anhebbar und absenkbar. Die Transportbehälter für Brillenglasrohlinge transportierenden Gurte oder Bänder der Gurt- oder Bandförderer der Transfereinrichtung können durch das Anheben oder das Absenken in eine Ebene verbracht werden, die entweder oberhalb oder unterhalb der Ebene der für den Transport der Transportbehälter vorgesehenen Gurte oder Bänder der Gurt- oder Bandförderer der Transportspuren liegt. Sind die Gurte oder Bänder der Gurt- oder Bandförderer der Transfereinrichtung im angehobenen Zustand, liegt der Transportbehälter ausschließlich auf den Gurten oder Bändern der Gurt- oder Bandförderer der Transfereinrichtung auf und ein Transfer des entsprechenden Transportbehälters auf eine benachbarte, abzweigende oder kreuzende Transportspur oder zu einer Prozesseinrichtung ist möglich. Sind die Gurte oder Bänder der Gurt- oder Bandförderer der Transfereinrichtung im abgesenkten Zustand, liegt der Transportbehälter ausschließlich auf den Gurten oder Bändern der Gurt- oder Bandförderer der Transportspur auf und der Transport kann auf dieser Transportspur erfolgen.

Der WO 2008/006644 A1 entnimmt man ein ähnliches Transport und Transfersystem, welches anstelle der Gurt- oder Bandförderer auf angetriebenen Rollen basiert.

Die Gliederkettenförderbänder nach der WO 03/013992 A1 sind mit Weichen ausgestattet, welche ebenfalls auf dem Prinzip des Anhebens und Absenkens funktionieren.

Die DE 10 2007 059 303 A1 offenbart eine Anlage mit einem Hauptförderband, das mindestens zwei in gleicher Richtung umlaufende Spuren aufweist. Eine äußere Spur dient als Überholspur, auf welcher Werkstücke oder Werkstückträger, welche einer Bearbeitung nicht zugeführt werden sollen, weiter transportiert werden. Ein Wechsel von einer Transportspur auf eine andere Transportspur erfolgt durch Schieber und zugeordnete Stempel. Außerdem sind Querförderer mit in entgegengesetzter Richtung laufenden Förderbändern jeder Bearbeitungsstation zugeordnet, wobei zu bearbeitende Werkstücke bzw. Werkstückträger über entsprechende Weichen von dem Hauptförderband an die Querförderer zur Bearbeitung in der jeweiligen Bearbeitungsstation ausgeschleust werden.

Die EP 1 947 035 A1, von der die Erfindung ausgeht, beschreibt ein Rollensystem. Eine Transportspur wird durch eine Vielzahl an Rollen gebildet, die hintereinander mit ihren Achsen quer zur Transportrichtung angeordnet sind. Ein Transportbehälter liegt auf einer Mehrzahl dieser die Transportspur bildenden Rollen auf. Eine oder mehrere dieser Rollen sind von einem motorischen Antrieb angetrieben, Eine Transfereinrichtung wird in einem beschriebenen und skizzierten Ausführungsbeispiel aus zwanzig kurzen Rollen gebildet, welche matrixartig angeordnet sind und die Kreuzung zweier sich kreuzender Transportspuren bilden. Jeweils fünf kurze Rollen überspannen in etwa die Länge der die Transportspur bildenden Rollen.

Jede kurze Rolle ist Bestandteil einer Zelle. Jede Zelle verfügt über einen eigenen Antrieb, um die Rolle um ihre Rollenachse (d.h. ihre Zylinderachse) anzutreiben. Weiter verfügt die Zelle über einen zusätzlichen eigenen Antrieb, um die Rolle um eine senkrecht zu ihrer Rollenachse verlaufende Mittenachse zu drehen. Die Transportrichtung und Ausrichtung eines auf mehreren der kurzen Rollen aufliegenden Transportbehälters lässt sich durch eine entsprechende Wahl und Änderung der Rotationsgeschwindigkeit der jeweiligen Rolle um ihre Rollenachse und eine entsprechende Wahl und Änderung der Ausrichtung der Rollenachse durch Drehung um die Mittenachse festlegen oder ändern.

Die US 2003/161714 A1 beschreibt ein Speicher- und Puffersystem für Transportbehälter, die in der Halbleiterfertigung zum Einsatz kommen. Das System weist Rotationsmittel auf, um den Transportbehälter von der Bandstraße in das Speicher- und Puffersystem zu transferieren oder umgekehrt.

Die EP 3 064 455 A1 offenbart eine Fördereinrichtung mit einem oder mehreren drehbaren Förderern.

Der US 2009/0099686 A1 ist eine gitterartig aufgebaute Fördereinrichtung zum Transport von Transportbehältern zwischen Prozessstationen zu entnehmen. An jedem Gitterpunkt ist ein Drehförderer angeordnet. Zu jedem Drehförderer erfolgt der Transport mittels nicht drehbarer Linearförderer. Eine gitterartig aufgebaute Fördereinrichtung ist auch in der US 6425477 B1 beschrieben.

Der US 2013/0192954 A1 entnimmt man u.a. drehbare Rollenförderer.

Die WO 2015/173689 A1 bezieht sich auf ein Fördersystem zum Fördern von Behältern. Bestandteil des Fördersystems sind Linear- und Drehförderer.

Die JP 2009137687 A offenbart matrixartig angeordnete Dreh-/Transporteinrichtungen. Ein Transportbehälter liegt gleichzeitig auf der Auflagefläche mehrerer Dreh-/Transporteinrichtungen der Dreh-/Transporteinrichtungs-Matrix auf. Benachbarte Dreh-/Transporteinrichtungen können um 45° gegeneinander gedreht werden, so dass sich die Transportrichtung beim Transport der Transportbehälter ändert. Der Transportbehälter kann infolge der Drehung eine Viertelkreisbahn beschreiben. Es ist auch möglich, dass der Transport unter einem Winkel von 45° zur ursprünglichen Richtung erfolgt.

Die US 5577596 A beschreibt eine Sortiereinrichtung mit einer Transporteinrichtung zum Verschieben von Gegenständen wie beispielsweise Postsendungen von einer Eingabestation zu einer Ausgabeposition, die aus einer Vielzahl von Ausgangspositionen ausgewählt ist. Die Transportvorrichtung umfasst ein Feld von einzelnen Transporteinheiten, die in einer hexagonalen Gitterform angeordnet sind und jeweils mit einem Transportmechanismus versehen sind, der auf einem drehbaren Träger angeordnet ist.

Die EP 1375389 A1 beschreibt eine Fördervorrichtung mit einer Förderfläche mit mehreren Förderabschnitten. Es sind eine Vielzahl senkrecht zur Rollenachse drehbare Rollen vorhanden. Ein ähnliches System ist in der US 2016145053 A1 beschrieben.

Die EP 1375389 A1 offenbart außerdem die Verwendung einer Transfereinrichtung für einen Artikel, wobei die Transfereinrichtung
- in Form einer 3x2-Matrix unmittelbar aneinander angrenzend angeordneten Dreh-/ Transporteinrichtungen ausgebildet ist, wobei die 3x2-Matrix einen Aufbau in der Art einer Tabelle mit 3 Zeilen und 2 Spalten zuordenbaren Feldern oder Zellen definiert,
- wobei die Dreh-/Transporteinrichtungen in Draufsicht wie die Felder oder Zellen der 3 Zeilen und der 2 Spalten aufweisenden Tabelle angeordnet sind, wobei
- jede der Dreh-/Transporteinrichtungen eine Auflage mit einer Auflagefläche für den Artikel aufweist, wobei die Auflagefläche Platz für einen oder mehrere Artikel bietet,
- wobei die Auflage wenigstens als Dreipunktauflage ausgebildet ist, wobei die Auflage durch mehrere Rollen gebildet ist, wobei
- jede der unmittelbar aneinander angrenzend angeordneten Dreh-/Transporteinrichtungen der 3x2-Matrix einen eigenen Antrieb zum Drehen und einen eigenen Antrieb zum Transportieren aufweist, und wobei
- jede der 3 Zeilen der 3x2-Matrix Bestandteil einer eigenen Transportspur, nämlich einer linken äußeren Transportspur, einer mittleren Transportspur und einer rechten äußeren Transportspur ist, längs der der Artikel transportiert wird.

Der vorliegenden Erfindung liegt die Aufgabe zugrunde, eine Transfereinrichtung für einen Transportbehälter für Brillengläser oder Brillenglasrohlinge , zum flexiblen Transfer zwischen Transportspuren und zwischen einer Transportspur und einer Prozesseinrichtung zu verwenden.

Diese Aufgabe wird durch Verwendung einer Transfereinrichtung nach dem Patentanspruch 1 gelöst. Vorteilhafte Ausführungen und Weiterbildungen der Erfindung sind Gegenstand der Unteransprüche.

Die erfindungsgemäß verwendete Transfereinrichtung für einen Transportbehälter umfasst in Form einer 3x2-Matrix angeordnete Dreh-/Transporteinrichtungen. Ein Transportbehälter für Brillengläser oder Brillenglasrohlinge ist im Allgemeinen zur Aufnahme von zwei oder ggf. vier Brillengläsern oder Brillenglasrohlingen sowie zugeordneter Auftragspapiere und Zubehörteile konzipiert. Ein typischer Transportbehälter ist z.B. in der EP 2 321 200 B1 beschrieben. Unter einer Matrix versteht man im Rahmen der vorliegenden Erfindung ganz allgemein einen Aufbau in der Art einer Tabelle mit Zeilen und Spalten zuordenbaren Feldern oder Zellen. In Draufsicht sind die Dreh-/Transporteinrichtungen wie die Felder oder Zellen einer ganzzahligen Anzahl an Zeilen und einer ganzzahligen Anzahl an Spalten aufweisenden Tabelle angeordnet. Zumindest eine der Anzahlen der Zeilen oder Spalten muss dabei größer als eins sein, um eine Tabelle zu bilden. Dreh-/Transporteinrichtung bezeichnet in Bezug auf die Erfindung eine Einrichtung, die geeignet ist zum Einen den Transportbehälter in linearer Richtung zu transportieren (bzw. zu fördern) und zum Anderen die Transportrichtung des Transportbehälters zu drehen.

Jede der Dreh-/Transporteinrichtungen weist eine Auflage für den Transportbehälter auf, auf der der Transportbehälter zum Transport aufliegt. Abweichend von der in der EP 1 947 035 A1 beschriebenen Ausführung liegt der Transportbehälter nicht nur punktuell auf, sondern die Auflage ist wenigstens als Dreipunktauflage ausgebildet. Unter (wenigstens) als Dreipunktauflage ausgebildet versteht man vorliegend, dass (wenigstens) drei Auflagepunkte für den Transportbehälter vorhanden sind, die sich nicht in einer Linie befinden und untereinander jeweils einen möglichst großen Abstand haben. Ähnlich einem dreibeinigen Hocker, der nicht wackeln kann, liegt der Transportbehälter durch diese Vorgehensweise in jedem der drei Punkte zwangsläufig sicher auf. Anders ausgedrückt ist die Auflage für den Transportbehälter so gewählt, dass ein oder mehrere Transportbehälter auf jeder der Dreh-/Transporteinrichtungen Platz finden.

Als Prozesseinrichtungen sind im Rahmen der vorliegenden Erfindung sämtliche Einrichtungen zu verstehen, in denen wenigstens ein Prozessschritt am jeweiligen Brillenglasrohling erfolgen kann, um diesen zum finalen Rohbrillenglas oder fertigen Brillenglas zu überführen.

Ganz allgemein umfasst der Begriff Prozesseinrichtung alle Arten von Bearbeitungseinrichtungen, Konditioniereinrichtungen und Kontrolleinrichtungen wie z.B. Einrichtungen zum Blocken, Abkühlen, Erwärmen, Befeuchten, Trocknen, Begasen, Formgeben wie insbesondere spanend Bearbeiten, Auftragen, Polieren, Prüfen und Messen, Beschichten und Markieren.

IDie Auflage ist regelmäßig durch ein oder mehrere Gurtförderbänder gebildet. Übliche Transporteinrichtungen haben Doppelgurtförderbänder, welche in dieser Variante zum Einsatz kommen können. Die Auflage für die Transportbehälter auf einer Dreh-/Transporteinrichtung, welche im vorliegenden Ausführungsbeispiel durch die Gurtbänder der Doppelgurtförderbänder festgelegt ist, ist so gewählt, dass ein oder mehrere Transportbehälter Platz finden.

Anstelle durch Gurtförderbänder kann die Auflage auch durch ein oder mehrere Gliederketten, durch einen oder mehrere Riemen oder durch mehrere Rollen realisiert sein, welche zum Transportieren (bzw. zum Fördern) des jeweiligen Transportbehälters in linearer Richtung benötigt werden.

In einer Variante sieht die Erfindung vor, dass die Auflage in diskreten Schritten ausrichtbar ist. Anders ausgedrückt kann bei dieser Variante die Auflage und damit die lineare Transportrichtung des Transportbehälters in diskreten Schritten gedreht werden. Transfers und Transporte zwischen den Dreh-/Transporteinrichtungen untereinander oder zwischen den Dreh-/Transporteinrichtungen und den Prozesseinrichtungen oder zwischen den Dreh-/Transporteinrichtungen und reinen Transporteinrichtungen sind dann nur in bestimmten vorgegebenen Transportrichtungen möglich.

Es hat sich als besonders Vorteilhaft herausgestellt, wenn die Auflage in 45°-Schritten ausrichtbar ist. Ein Transfer eines Transportbehälters ist bei dieser Ausführungsform nicht nur zwischen Dreh-/Transporteinrichtungen einer Zeile oder einer Spalte der Matrix möglich, sondern auch in diagonaler Richtung zwischen aneinander angrenzenden Dreh-/Transporteinrichtungen benachbarter Zeilen und benachbarter Spalten.

Eine weitere Ausführungsvariante der vorliegenden Erfindung besteht darin, dass die Auflage in diskreten Orientierungen ausrichtbar ist. So sind nach dieser Variante beispielsweise nur Orientierungen der Transportrichtung längs einer ersten Transportspur, längs einer senkrecht dazu angeordneten Transportspur und längs einer in einem anderen Winkel angeordneten Transportspur möglich. Die Transfereinrichtung lässt sich auf diese Weise flexibel auf die Anordnung der Komponenten eines jeweiligen Herstellungssystems anpassen.

Es hat sich als vorteilhaft herausgestellt, wenn die Auflage der Transfereinrichtung in genau drei diskreten Orientierungen oder in genau vier diskreten Orientierungen oder in genau fünf diskreten Orientierungen oder in genau sechs diskreten Orientierungen oder in genau sieben diskreten Orientierungen oder in genau acht diskreten Orientierungen ausrichtbar ist. Mit dieser Variante lassen sich z.B. sämtliche in 45°-Schritten winklig zueinander angeordnete Transportspuren und sämtliche Transfereinrichtungsmatrizen größer als 2 x 2 bedienen.

Aus der Menge der unterschiedlichen Matrizenkonfigurationen für Transfereinrichtungen haben nur wenige eine herausragende Bedeutung zu. Erfindungsgemäß sind die Dreh-/Transporteinrichtungen in Form einer 3 x 2 - Matrix angeordnet.

Erfindungsgemäß ist jede der der Dreh-/Transport-einrichtungen mit einem eigenen Antrieb zum Drehen ausgestattet. Zusätzlich weist jede der Dreh-/Transporteinrichtungen auch einen eigenen Antrieb zum Transportieren aufweisen. Jede der Dreh-/Transporteinrichtungen kann damit autark arbeiten und in Betrieb genommen und außer Betrieb gesetzt werden. Damit ist es möglich, einzelne Dreh-/Transporteinrichtungen zu Wartungs- oder Reparaturzwecken abzuschalten, ohne die gesamte Matrix außer Betrieb setzen zu müssen und damit eine ganze Fertigungslinie aus der Produktion nehmen zu müssen. Bevorzugt kann jede Dreh-/Transporteinrichtung mit wenigen Handgriffen abgehoben bzw. ausgesteckt werden.

Eine Ausführungsvariante betrifft die Möglichkeit, den Antrieb zum Drehen umkehrbar auszubilden. Alternativ oder zusätzlich kann selbstverständlich auch der Antrieb zum Transportieren Kombination mit der Möglichkeit des Transports in beide Richtungen erlaubt es die Transfer- und Transportgeschwindigkeiten für einen Transportbehälter ohne Erhöhung der Ausfallwahrscheinlichkeit zu erhöhen.

In einer weiteren Ausgestaltung sieht die Erfindung vor, jede der Dreh-/Transporteinrichtungen mit einer zu einer anderen der Dreh-/Transporteinrichtungen komplementären Kopplungseinrichtung auszustatten. Damit ist es möglich, einzelne Dreh-/Transporteinrichtungen oder Teile davon zu Wartungs- oder Reparaturzwecken zu entnehmen, ohne die gesamte Matrix außer Betrieb setzen zu müssen. Die Effizienzsteigerung ist enorm.

Die komplementäre Kopplungseinrichtung kann wahlweise oder kumulativ zu einer komplementären mechanischen Kopplung und/oder zu einer komplementären steuerungs- und/oder regelungstechnischen Kopplung ausgebildet sein.

Es hat sich gezeigt, dass für den oben beschriebenen Anwendungszweck jede der Dreh-/Transporteinrichtungen Vorteilhafterweise ein Rastermaß zwischen 20 cm x 20 cm und 50 cm x 50 cm aufweisen sollte. Unter Rastermaß versteht man im vorliegenden Fall der Flächenbedarf für jede der Dreh-/Transporteinrichtungen im Matrixverbund bei Draufsicht von oben. Ein derartiges Rastermaß erlaubt es Transportbehälter gängiger Größen zu transportieren.

In weiterer Ausgestaltung dieser Variante ist es günstig, wenn die Auflage höchstens 50 % der durch das Rastermaß definierten Fläche abdeckt. Damit wird ein Einsatz im Reinraum der ISO Klasse 5 möglich, weil ein Laminarstrom mit Geschwindigkeitsaustritt zwischen 0,2 und 0,43 m/s auf Produktebene durchströmen kann. Bevorzugt ist ein Laminarstrom von 0,43 m/s.

Weiter hat es sich als erstrebenswert herausgestellt, wenn jede der Dreh-/Transporteinrichtungen eine Erfassungseinrichtung für den Transportbehälter aufweist. Damit ist es zum Einen möglich, den Transportweg für den Transportbehälter exakt festzulegen und zum Anderen kann ein etwaig entnommener Transportbehälter an beliebiger Stelle wieder dem Prozess zugeführt werden.

Eine weitere Variante der Erfindung besteht darin, jede der Dreh-/Transporteinrichtungen mit einer Statusmeldeeinrichtung auszustatten. Eine derartige Statusmeldeeinrichtung kann z.B. den aktuellen Betriebszustand und die Einsatzbereitschaft der jeweiligen Dreh-/Transporteinrichtung an den das Herstellungssystem steuernden Computer melden.

aktuellen Betriebszustand und die Einsatzbereitschaft der jeweiligen Dreh-/Transporteinrichtung an den das Herstellungssystem steuernden Computer melden.

Die Erfindung wird nachfolgend anhand der Zeichnungen näher beschrieben. Es zeigen:
- Figur 1: ein erstes Ausführungsbeispiel eines Herstellungssystems mit einer Mehrzahl an erfindungsgemäßen Transfereinrichtungen in Draufsicht von oben
- Figur 2: einen Ausschnitt betreffend die Fördertechnik des Herstellungssystems nach der Figur 1 einschließlich exemplarisch einer erfindungsgemäßen Transfereinrichtung
- Figur 3: einen Ausschnitt aus einem anderen Herstellungssystem mit einer alternativen Ausführungsvariante zur in der Figur 2 gezeigten Transfereinrichtung
- Figur 4: eine Transporteinrichtung in perspektivischer Ansicht
- Figur 5: eine Dreh-/Transporteinrichtung der in den Figuren 1 bis 3 gezeigten Transfereinrichtungen in perspektivischer Ansicht
- Figur 6: die Dreh-/Transporteinrichtung nach der Figur 5 in Draufsicht
- Figur 7: eine/mehrere Dreh-/Transporteinrichtungen nach der Figur 5 mit Kopplungseinrichtung a) Ausschnitt aus einem Verbund mehrerer Dreh-/Transporteinrichtungen b) Aufschnitt der Dreh-/Transporteinrichtung nach der Figur 5
- Figur 8: eine alternative Ausführungsvariante einer erfindungsgemäßen Dreh-/Transporteinrichtung in perspektivischer Ansicht
- Figur 9: eine weitere alternative Ausführungsvariante einer Transfereinrichtung mit einer Vielzahl der in der Figur 7 gezeigten Dreh-/Transporteinrichtung
- Figur 10: eine nicht zur Erfindung gehörende vierte Ausführungsvariante einer Transfereinrichtung
- Figur 11: eine nicht zur Erfindung gehörende fünfte Ausführungsvariante einer Transfereinrichtung
- Figur 12: eine sechste Ausführungsvariante einer Transfereinrichtung
- Figur 13: eine nicht zur Erfindung gehörende siebte Ausführungsvariante einer Transfereinrichtung
- Figur 14: eine nicht zur Erfindung gehörende achte Ausführungsvariante einer Transfereinrichtung
- Figur 15: eine neunte Ausführungsvariante einer Transfereinrichtung
- Figur 16: eine nicht zur Erfindung gehörende zehnte Ausführungsvariante einer Transfereinrichtung
- Figur 17: eine elfte Ausführungsvariante einer Transfereinrichtung
- Figur 18: eine erste Möglichkeit des Transports eines Transportbehälters mit der nicht zur Erfindung gehörenden fünften Ausführungsvariante einer Transfereinrichtung nach der Figur 10
- Figur 19: eine zweite Möglichkeit des Transports eines Transportbehälters mit der nicht zur Erfindung gehörenden fünften Ausführungsvariante einer Transfereinrichtung nach der Figur 10
- Figur 20: eine dritte Möglichkeit des Transports eines Transportbehälters mit der nicht zur Erfindung gehörenden fünften Ausführungsvariante einer Transfereinrichtung nach der Figur 10
- Figur 21: eine vierte Möglichkeit des Transports eines Transportbehälters mit der nicht zur Erfindung gehörenden fünften Ausführungsvariante einer Transfereinrichtung nach der Figur 10
- Figur 22: eine fünfte Möglichkeit des Transports eines Transportbehälters mit der nicht zur Erfindung gehörenden fünften Ausführungsvariante einer Transfereinrichtung nach der Figur 10
- Figur 23: die nicht zur Erfindung gehörende fünfte Ausführungsvariante einer Transfereinrichtung nach der Figur 10 mit einem zentral angeordneten Roboter zum Bestücken eines Transportbehälters oder zum Umsetzen des Transportbehälters
- Figur 24: die nicht zur Erfindung gehörende fünfte Ausführungsvariante einer Transfereinrichtung nach der Figur 10 mit zwei dezentral angeordneten Robotern zum Bestücken eines Transportbehälters oder zum Umsetzen des Transportbehälters
- Figur 25: die nicht zur Erfindung gehörenden fünfte Ausführungsvariante einer Transfereinrichtung nach der Figur 10 mit einem dezentral angeordneten Roboter zum Bestücken eines Transportbehälters oder zum Umsetzen des Transportbehälters und mit einer Anbindung an eine konventionelle Fördertechnik
- Figur 26: eine nicht zur Erfindung gehörende dreizehnte Ausführungsvariante einer Transfereinrichtung mit einer zweiseitigen Anbindung an eine konventionelle Fördertechnik

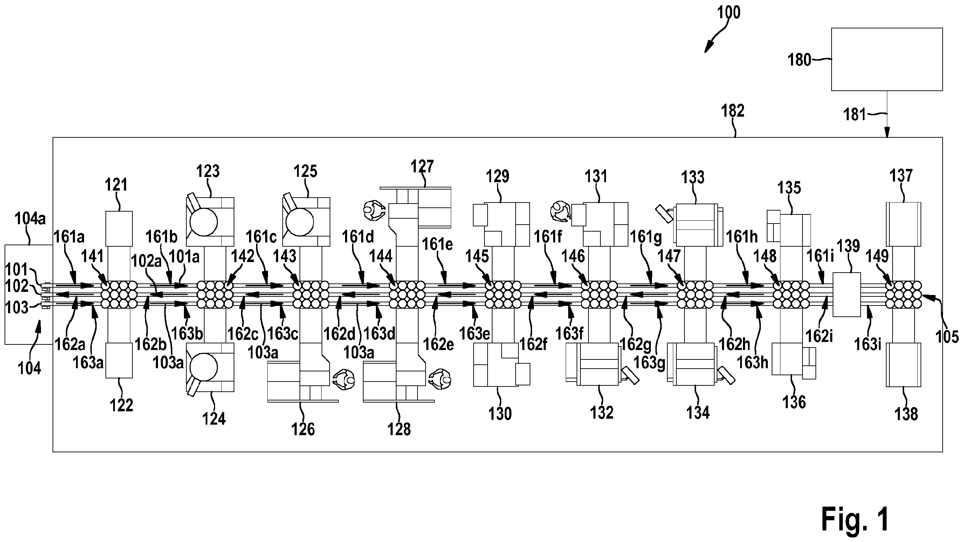

Die Figur 1 zeigt ein erstes Ausführungsbeispiel eines Herstellungssystems 100 für Brillengläser aus Brillenglasrohlingen in Draufsicht von oben.

Das Herstellungssystem umfasst drei Transportspuren 101, 102, 103 zum Transport von Brillenglasrohlingen in Transportbehältern und eine Mehrzahl an Prozesseinrichtungen 121, 122, ...137, 138. Die drei Transportspuren 101, 102, 103 sind nebeneinander angeordnet. Die drei Transportspuren 101, 102, 103 werden der Unterscheidbarkeit wegen als linke äußere Transportspur 101, rechte äußere Transportspur 103 und mittlere Transportspur 102 bezeichnet. Jede dieser Transportspuren 101, 102, 103 ist zum Transport der mit Brillenglasrohlingen bestückten Transportbehälter in einer jeweiligen Transportrichtung 101a, 102a, 103a vorgesehen. Diese Transportspuren 101, 102, 103 dienen dazu, die Brillenglasrohlinge zu den jeweiligen Prozesseinrichtungen 121, 122, ...137, 138 zu transportieren, in denen diese bis zur Roh- oder finalen Fertigstellung prozessiert werden. Die drei Transportspuren 101, 102, 103 bilden demnach zusammen eine Transportvorrichtung zum Transportieren eines Brillenglasrohlings mittels eines Transportbehälters von einer Aufnahmestelle 104, über die der Brillenglasrohling in dem Transportbehälter aufgenommen wird, über die Transportstrecke auf der ein Transfer zur jeweiligen Prozesseinrichtung 121, 122, ...137, 138 und wieder zurück zur Transportstrecke erfolgt auf der er bis zu einer Abgabestelle 105, an der der prozessierte Brillenglasrohling im fertigen oder teilfertigen Zustand entnommen werden kann.

Neben der linken äußeren Transportspur 101 sind mehrere Prozesseinrichtungen 121, 123, 125, 127, 129, 131, 133, 135, 137 angeordnet. Neben der rechten äußeren Transportspur 103 sind ebenfalls mehrere Prozesseinrichtungen 122, 124, 126, 128, 130, 132, 134, 136, 138 für die Brillenglasrohlinge angeordnet. Die Prozesseinrichtung 121 ist eine Blockeinrichtung zum Blocken der Brillenglasrohlinge. Die Prozesseinrichtung 122 ist eine Messeinrichtung, um die Oberflächenkontur der geblockten Fläche des Brillenglasrohlings zu messen. Die Prozesseinrichtungen 123, 124 und 125 sind Fräseinrichtungen. Die Prozesseinrichtungen 126, 127, 128 sind spanabhebende Dreheinrichtungen. Die Prozesseinrichtungen 129, 130, 131 sind Konditioniereinrichtungen. Die Prozesseinrichtungen 132, 133, 134 sind Vorpoliereinrichtungen und die Prozesseinrichtungen 135, 136 sind Nachpoliereinrichtungen. Die Prozesseinrichtung 137 ist eine Markiereinrichtung und die Prozesseinrichtung 138 ist eine Qualitätsprüfeinrichtung. Eine weitere Prozesseinrichtung 139, welche alle drei Transportspuren 101, 102, 103 überspannt ist eine Reinigungseinrichtung 140.

Der Figur 1 entnimmt man, dass die Transportrichtung 101a der linken äußeren Transportspur 101 und die Transportrichtung 103a der rechten äußeren Transportspur 103 identisch sind. Demgegenüber ist die Transportrichtung 102a der mittleren Transportspur 102 entgegengesetzt zu den Transportrichtungen 101a, 103a der linken äußeren Transportspur 101 und der rechten äußeren Transportspur 103. Unter Transportrichtung ist jeweils die Bewegungsrichtung des jeweils transportierten Brillenglasrohlings längs der jeweiligen Transportspuren 101, 102, 103 zu verstehen. Dies schließt nicht aus, dass an den nachfolgend beschriebenen Transferstellen zwischen den Transportspuren 101, 102, 103 ein Transfer von Brillenglasrohlingen stattfindet bzw. stattfinden kann. Die Brillenglasrohlinge werden während des jeweiligen Transports ausgehend von der Aufnahme 104 mit Hilfe des Transportbehälters transportiert. In diesem Transportbehälter sind die Brillenglasrohlinge, z.B. die Halbfabrikate, üblicherweise paarweise abgelegt. Paarweise bedeutet in diesem Zusammenhang, dass die in einem Transportbehälter abgelegten Brillenglasrohlinge für die beiden Brillengläser einer Brille eines Nutzers bestimmt sind.

Der Figur 1 entnimmt man, dass jeweils zwei Prozesseinrichtungen, die in Bezug auf die Transportvorrichtung einander gegenüber liegend angeordnet sind, jeweils ein Prozesseinrichtungspaar bilden. So bilden die Prozesseinrichtungen 121 und 122 ein Prozesseinrichtungspaar. Weiter bilden die Prozesseinrichtungen 123 und 124 ein Prozesseinrichtungspaar. Es bilden auch die Prozesseinrichtungen 125 und 126 ein Prozesseinrichtungspaar usw.

Jedem Prozesseinrichtungspaar 121, 122; 123, 124; 125, 126; ... 135, 136; 137, 138 ist eine erfindungsgemäße Transfereinrichtung 141, 142, 143, ... 146, 147, 148, 149 zugeordnet. Diese erfindungsgemäßen Transfereinrichtungen 141, 142, 143, ... 146, 147, 148, 149 dienen einem Transfer der Brillenglasrohlinge zwischen der jeweiligen linken Prozesseinrichtung 121, 123, 125, 127, 129, 131, 133, 135, 137, 139 des Prozesseinrichtungspaars 121, 122; 123, 124; 125, 126; ... 135, 136; 137, 138 und der linken äußeren Transportspur 101 sowie der mittleren Transportspur 102. Ferner dienen die Transfereinrichtungen 141, 142, 143, ... 146, 147, 148, 149 einem Transfer der Brillenglasrohlinge zwischen der jeweiligen rechten Prozesseinrichtung 122, 124, 126, 128, 130, 132, 134, 136, 138 des Prozesseinrichtungspaars 121, 122; 123, 124; 125, 126; ... 135, 136; 137, 138 und der rechten äußeren Transportspur 103 sowie der mittleren Transportspur 102. Über die jeweils äußere Transportspur 101, 103 kann demnach eine Zufuhr eines Brillenglasrohlings zur jeweils benachbarten Prozesseinrichtung (z.B. zu der Prozesseinrichtung 127) zur wertschöpfenden Prozessierung erfolgen. Die mittlere Transportspur 102 dient dem Rücktransport des Brillenglasrohlings zu einer in der Wertschöpfungskette vorhergehenden Prozesseinrichtung (z.B. ausgehend von der Prozesseinrichtung 127 zur Prozesseinrichtung 126 oder zur Prozesseinrichtung 125 oder zur Prozesseinrichtung 121 usw.), um z.B. eine Nachbearbeitung oder nochmalige Überprüfung vorzunehmen.

Jede Transportspur 101, 102, 103 umfasst neben den alle Transportspuren 101, 102, 103 übergreifenden erfindungsgemäßen Transfereinrichtungen 141, 142, 143, ... 146, 147, 148, 149 eine Mehrzahl an Transporteinrichtungen 161a, 162a, 163a, 161b, 162b, 163b ...161h, 162h, 163h, 161i, 162i, 163i, welche als Doppelgurtförderbänder ausgebildet sind. Die Transporteinrichtungen 161a, 161b, 161c, ... 161h, 161i; 163a, 163b, 163c, ...163h, 163i der beiden äußeren Transportspuren 101, 103 dienen der Förderung der Brillenglasrohlinge in Wertschöpfungsrichtung. Es erfolgt eine Förderung ausschließlich in Wertschöpfungsrichtung. Die Transporteinrichtungen 162a, 162b, 162c, ... 162h, 162i der mittleren Transportspur 102 dienen der Förderung der Brillenglasrohlinge entgegen der Wertschöpfungsrichtung. Es erfolgt eine Förderung ausschließlich entgegen der Wertschöpfungsrichtung auf der mittleren Transportspur 102.

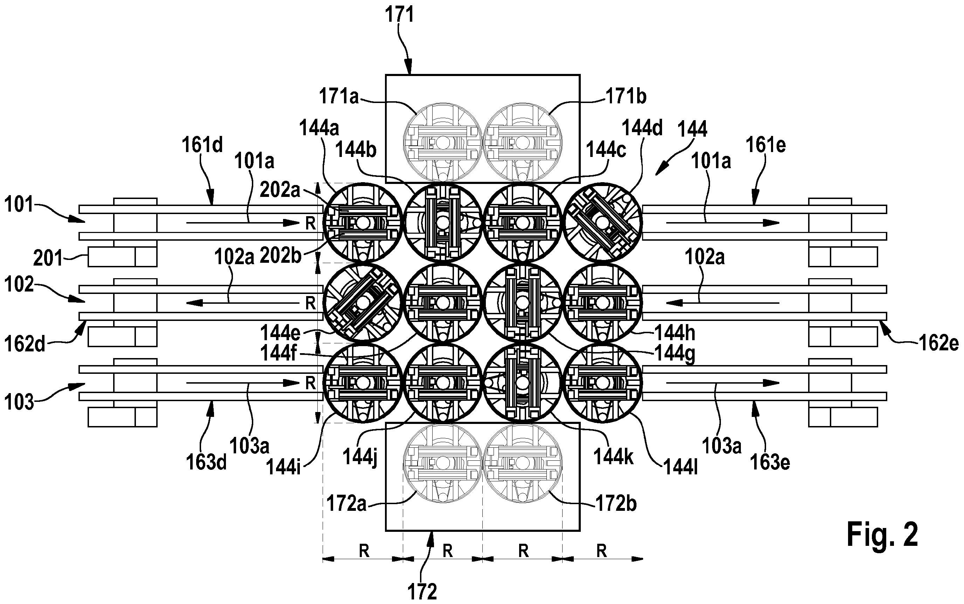

Die Transporteinrichtungen 161a, 161b, ... 161i, 162a, 162b, ... 162i, 163a, 163b, ...163i und die Transfereinrichtungen 141, 142, 143, ... 146, 147, 148, 149 sind in identischer Weise ausgeführt. Die Figur 2 zeigt einen Ausschnitt aus der Figur 1, in dem sechs Transporteinrichtungen 161d, 161e, 162d, 162e, 163d, 163e, die erfindungsgemäße Transfereinrichtung 144 umfassend zwei Zuführ-/Zwischenlagermodule 171, 172 für die Prozesseinrichtungen 127, 128 zu sehen sind.

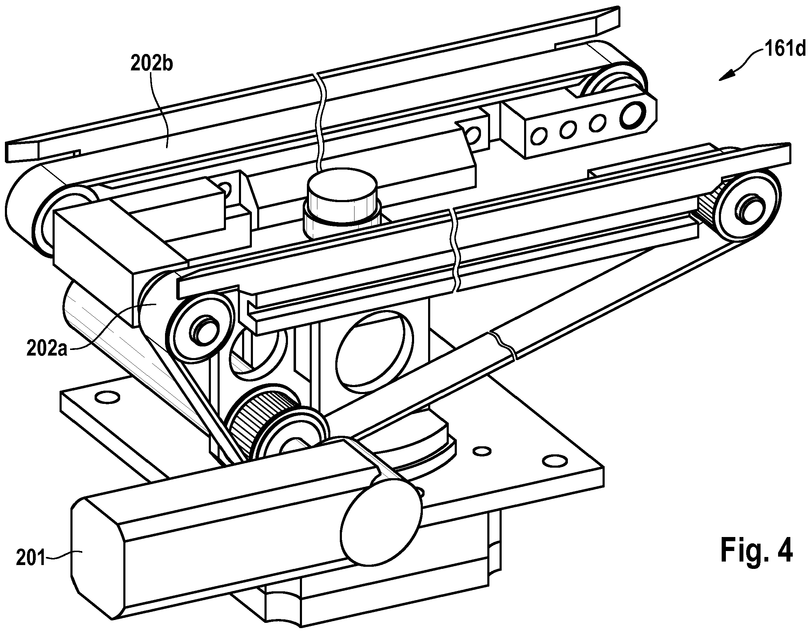

Die Figur 4 zeigt exemplarisch die Transporteinrichtung 161d. Diese Transporteinrichtung 161d umfasst einen motorischen Antrieb 201 und zwei Gurtbänder 202a, 202b, die von dem motorischen Antrieb 201 angetrieben werden. Die beiden Gurtbänder 202a, 202b dienen als Auflage für den oben beschriebenen Transportbehälter für die Brillenglasrohlinge.

Die gezeigte Ausführungsvariante einer erfindungsgemäßen Transfereinrichtung 144 umfasst die zwölf Dreh-/Transporteinrichtungen 144a, 144b, 144c, ... 144i, 144j 144k, 1441. Die vier Dreh-/Transporteinrichtungen 144a, 144b, 144c, 144d der Transfereinrichtung 144 gehören dabei zur linken äußeren Transportspur 101, die vier Dreh-/Transporteinrichtungen 144e, 144f, 144g, 144h gehören zur mittleren Transportspur 102 und die vier Dreh-/Transporteinrichtungen 144i, 144j, 144k, 1441 gehören zur rechten äußeren Transportspur 103. Sie bilden damit eine 3 x 4 - Matrix.

Beidseitig der 3 x 4 - Matrix der Transfereinrichtung 144 sind jeweils zwei weitere Dreh-/Transporteinrichtungen 171a, 171b; 172a, 172b angeordnet. Diese Dreh-/Transporteinrichtungen 171a, 171b; 172a, 172b bilden die beiden Zuführ-/Zwischenlagermodule 171, 172, welche vornehmlich der Zwischenlagerung und Zuführung des Brillenglasrohlings zu der jeweiligen Prozesseinrichtung 127, 128 dienen. Sie sind grundsätzlich Bestandteil der Transfereinrichtung 144.

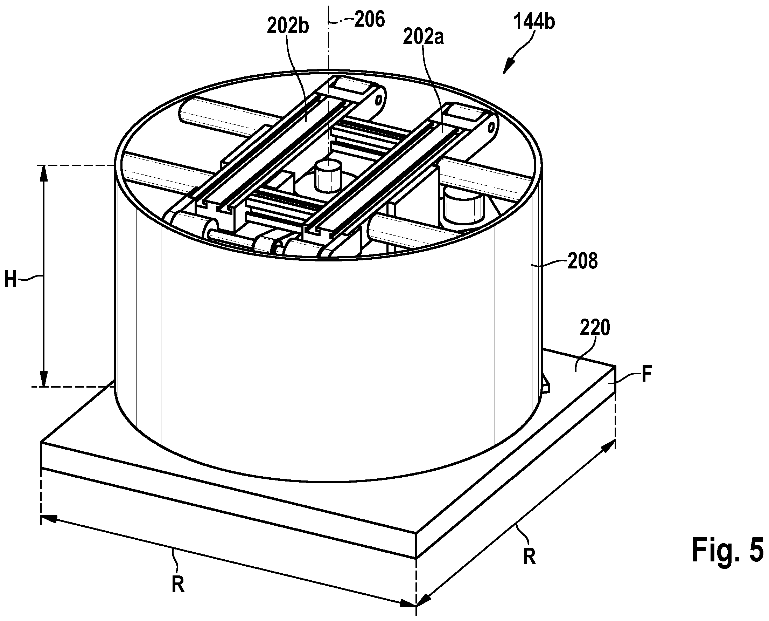

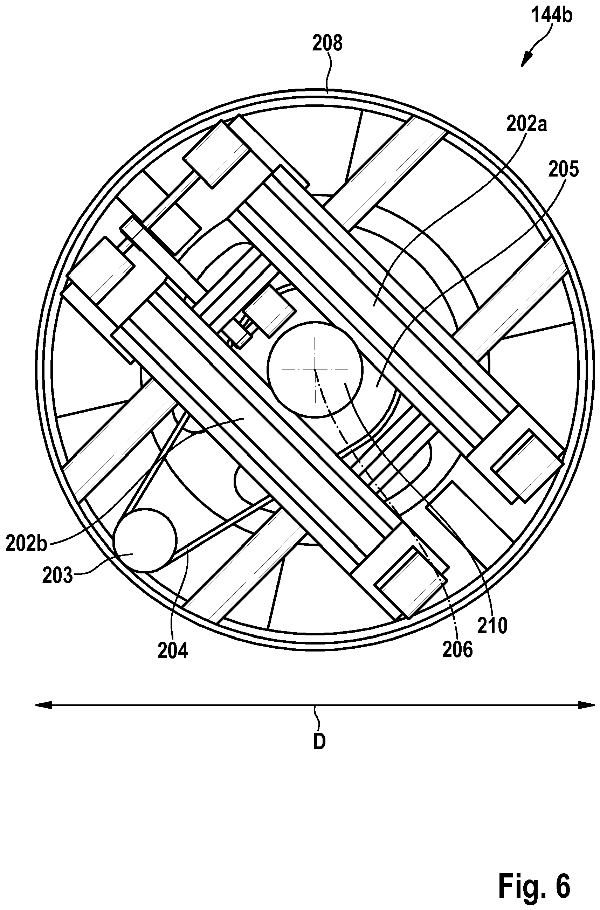

Alle Dreh-/Transporteinrichtungen 144a, 144b, 144c, ... 144i, 144j 144k, 1441; 171a, 171b; 172a, 172b sind in identischer Weise ausgebildet. Die Figur 5 zeigt exemplarisch die Dreh-/Transporteinrichtung 144b in perspektivischer Darstellung. Die Figur 6 zeigt dieselbe Dreh-/Transporteinrichtung 144b in Draufsicht von oben. Die Dreh-/Transporteinrichtung 144b umfasst grundsätzlich eine Transporteinrichtung der in der Figur 4 gezeigten Art mit motorischem Antrieb 201 in miniaturisierter Ausführung und zwei Gurtbändern 202a, 202b. Darüber hinaus verfügt die Dreh-/Transporteinrichtung 144b über eine Dreheinrichtung mit motorischem Antrieb 203, der ein Rad 205 über ein Gurtband 204 drehend um eine vertikale Achse 206 antreiben und so die Transportrichtung der beiden Gurtbänder 202a, 202b ändern kann. Die Dreh-/Transporteinrichtung 144b ermöglicht zum Einen den Transport des Transportbehälters längs der Transportspur 101 und zum Anderen nach entsprechender Drehung den Transport des Transportbehälters zu der benachbarten mittleren Transportspur 102 oder der benachbarten Prozesseinrichtung 127. Konkret kann ausgehend zwischen der Dreh-/Transporteinrichtung 144b und den Dreh-/Transporteinrichtungen 144a, 144c, 144e, 144f, 144g, 171a, 171b ein Transfer bzw. eine Übergabe des Transportbehälters stattfinden. Zu diesem Zweck muss die Dreh-/Transporteinrichtung 144b in 45°-Schritten gedreht werden können.

Zur Bereitstellung eines hohen Grads an Flexibilität ist eine Recheneinrichtung 180 vorhanden. Die Recheneinrichtung 180 ist eingerichtet, einen schnellsten Transportweg zu berechnen, um einen Transportbehälter mit Brillenglasrohlingen zu einer vorbestimmten Prozesseinrichtung (z.B. der Prozesseinrichtung 127) zu transportieren. Weiter ist die Recheneinrichtung 180 eingerichtet, einen kürzesten Transportweg zu berechnen, um einen vorbestimmten Brillenglasrohling der Brillenglasrohlinge zu einer vorbestimmten Prozesseinrichtung (z.B. der Prozesseinrichtung 127) der Prozesseinrichtungen 121, 122; 123, 124; 125, 126; ... 135, 136; 137, 138 zu transportieren. Schließlich ist ein Algorithmus in der Recheneinrichtung 180 hinterlegt, der vorbestimmte Vorfahrtsregeln bei der Berechnung des schnellsten oder kürzesten Transportwegs berücksichtigt. Eine ebenfalls vorhandene Steuereinrichtung 182, welche z.B. über eine drahtlose Verbindung 181 mit der Recheneinrichtung 180 verbunden ist, sorgt dafür, insbesondere z.B. durch entsprechende Ansteuerung der Transporteinrichtungen 161a, 161b, ... 161i, 162a, 162b, ... 162i, 163a, 163b, ...163i und der Dreh-/Transporteinrichtungen 144a, 144b, 144c, ... 144i, 144j 144k, 1441; 171a, 171b; 172a, 172b den Transportbehälter mit den Brillenglasrohlingen auf dem berechneten Transportweg zu transportieren.

Die Transportgeschwindigkeit der Transporteinrichtungen 161a, 161b, ... 161i, 162a, 162b, ... 162i, 163a, 163b, ...163i und der Dreh-/Transporteinrichtungen 144a, 144b, 144c, ... 144i, 144j 144k, 1441; 171a, 171b; 172a, 172b ist größer als 10 m/min und kann in der Ausführungsvariante variabel geregelt werden. Jede Dreh-/Transporteinrichtung 144a, 144b, 144c, ... 144i, 144j 144k, 1441; 171a, 171b; 172a, 172b hat eine Erfassungseinrichtung in Form einer RFID Lesestation 210 vorzugsweise im Drehpunkt 206 integriert. Damit können unterschiedliche Transportbehälter und somit unterschiedliche Aufträge in Echtzeit immer und überall verfolgt werden. Es ist auch unerheblich in welcher Ausrichtung die Transportbehälter transportiert werden d.h. es muss nicht mehr gewährleistet werden dass die Transportbehälter eine definierte Ausrichtung zur Transporteinheit, nämlich z.B. den Gurtbändern 202a, 202b aufweisen. Ferner ist unerheblich, wo der rechte/linke Brillenglasrohling bezüglich der Transportrichtung liegt.

Die nach oben weisende Fläche der Dreh-/Transporteinrichtungen 144a, 144b, 144c, ... 144i, 144j 144k, 1441; 171a, 171b; 172a, 172b, welche durch das Rastermaß R x R vorgegeben ist, wird in der Draufsicht zu maximal 50 % abgedeckt, um einen Einsatz im Reinraum ISO Klasse 5 zu ermöglichen. Somit kann ein laminarer Luftstrom mit Geschwindigkeitsaustritt von 0,3 (0,2 - 0,4 m/s) auf Produktebene durchströmen. Die Transportbehälter überwinden die Distanz zur nächsten Prozesseinrichtung 127, 128 mittels günstiger Doppelgurtförderbänder 202a, 202b.

Die Logik (Bewegung, Puffer / Parken, Stoppen zum Ausweichen bzw. Vorfahrtsregel) wird auf der eigentlichen mittleren Transportspur 102, insbesondere den Dreh-/Transporteinrichtungen 144e, 144f, 144g, 144h der aus den Dreh-/Transporteinrichtungen 144a, 144b, 144c, ... 144i, 144j 144k, 1441; 171a, 171b; 172a, 172b gebildeten 3 x 4 + (2 x 2) - Matrix abgewickelt. Die Steuerungseinrichtung 182 des Herstellungssystems 100 übernimmt die Grundregeln, die von der Recheneinrichtung 180, z.B. das System PCS der Firma Quantum, vorgegeben werden. Ein ständiger Informationsabgleich ist Voraussetzung. Jeder Auftrag lässt sich immer in Echtzeit auf der tatsächlichen Position lokalisieren. Die Entscheidungen zum optimalen Transportweg finden auf der Recheneinrichtungsebene statt und zwar "Schritt für Schritt" (n, n+1, n+2 etc.).

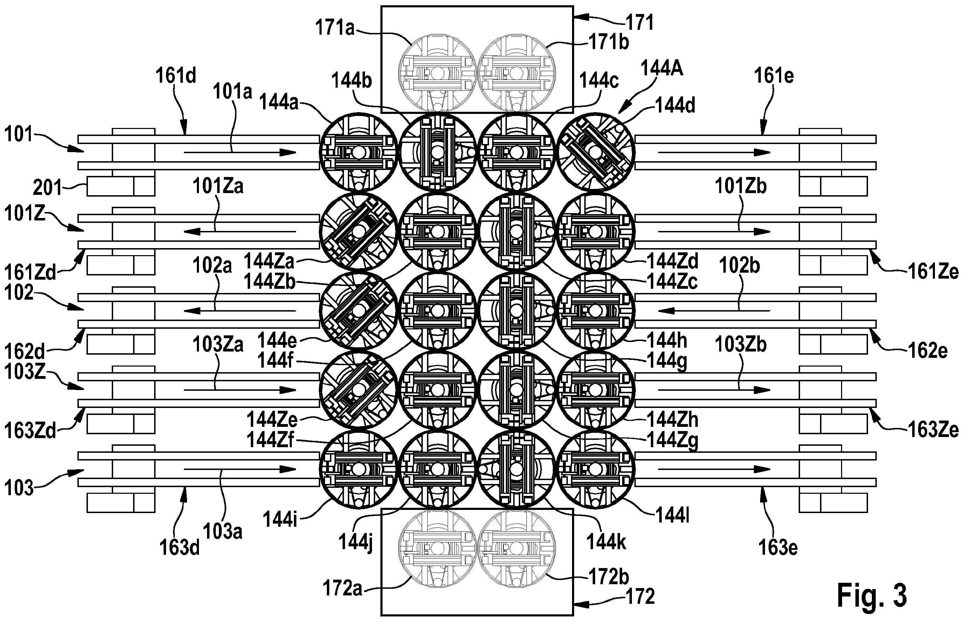

Die jeweils zwei (oder ggf. mehr) Dreh-/Transporteinrichtungen 171a, 171b; 172a, 172b, welche die Zuführ-/Zwischenlagermodule 171, 172 bilden und welche außerhalb des Mengenstroms angeordnet sind, bedienen direkt oder indirekt die Prozesseinrichtungen 161a, 161b, ... 161i, 162a, 162b, ... 162i, 163a, 163b, ...163i (z.B. eine Poliermaschine). Dies erfolgt regelmäßig mittels 6-Achs-Roboter und Doppel-Schwenk-Greifer z.B. mit Vakuumsauger.
Grundsätzlich ist das Herstellungssystem 100 in X und Y skalierbar. Das Herstellungssystem 100 kann neben den oben beschriebenen Transportspuren 101, 102 und 103 eine (oder ggf. mehrere) zwischen der linken äußeren Transportspur 101 und der mittleren Transportspur 102 angeordnete linke mittlere Transportspur 101Z zum Transport der Brillenglasrohlinge in einer Transportrichtung aufweisen. Das Herstellungssystem kann auch eine (oder ggf. mehrere) zwischen der rechten äußeren Transportspur 103 und der mittleren Transportspur 102 angeordnete rechte mittlere Transportspur(en) 103Z zum Transport der Brillenglasrohlinge in einer Transportrichtung aufweisen, wie dies z.B. die Figur 3 ausschnittsweise zeigt.

Diese zusätzlich zu den Transportspuren 101, 102, 103 vorhandenen Transportspuren 101Z, 103Z können dem Transport in Richtung der Wertschöpfungskette, zur Rückführung und/oder zur Zwischenlagerung von Transportbehältern mit den Brillenglasrohlingen dienen. Die Figur 3 zeigt vier der zusätzlich zu den Transporteinrichtungen 161a, 161b, ... 161i, 162a, 162b, ... 162i, 163a, 163b, ...163i vorhandenen Transporteinrichtungen 161Zd, 161Ze, 163Zd, 163Ze, welche Bestandteil der zusätzlichen Transportspuren 101Z, 103Z sind.

Die linke mittlere Transportspur 101Z umfasst vier linke mittlere Dreh-/Transporteinrichtungen 144Za, 144Zb, 144Zc, 144Zd. Die rechte mittlere Transportspur 103Z umfasst vier rechte mittlere Dreh-/Transporteinrichtungen 144Ze, 144Zf, 144Zg, 144Zh. Die den Transportspuren 101, 101Z, 102, 103Z, 103 zugehörigen Dreh-/Transporteinrichtungen 144a, 144b, 144c, ... 144i, 144j 144k, 144l und 144Za, 144Zb, 144Zc, 144Zd sowie 144Ze, 144Zf, 144Zg, 144Zh und die Dreh-/Transporteinrichtungen 171a, 171b; 172a, 172b der Zuführ-/Zwischenlagermodule 171, 172 sind in der Art einer 5 x 4 + (2 x 2) - Matrix eine Transfereinrichtung 144A bildend angeordnet.

Die Dreh-/Transporteinrichtungen 144a, 144b, 144c, ... 144i, 144j 144k, 1441 und 144Za, 144Zb, 144Zc, 144Zd, 171a, 171b; 172a, 172b haben in den vorstehend beschriebenen und in den Figuren 2 bis 6 gezeigten Ausführungsvarianten eine Höhe in Bezug auf die Bodenfläche zwischen 800 mm und 1200 mm, die gängige Höhe ist 950 mm. Die Modulbauhöhe H ist ca. 200 mm (siehe Figur 5). Die Dreh-/Transporteinrichtungen 144a, 144b, 144c, ... 144i, 144j 144k, 144l und 144Za, 144Zb, 144Zc, 144Zd, 171a, 171b; 172a, 172b sind in einem Raster R von 300 mm angeordnet (siehe Figuren 2 und 5). D.h. die Dreh-/Transporteinrichtungen 144a, 144b, 144c, ... 144i, 144j 144k, 144l und 144Za, 144Zb, 144Zc, 144Zd sowie 171a, 171b; 172a, 172b haben einen Außendurchmesser D von 298 mm (siehe Figur 6). Da die einzelnen Dreh-/Transporteinrichtungen 144a, 144b, 144c, ... 144i, 144j 144k, 144l und 144Za, 144Zb, 144Zc, 144Zd sowie 171a, 171b; 172a, 172b einen geschlossenen Außenring 208 haben (siehe Figuren 5 und 6), entsteht keine Quetsch- und Scherstelle und somit kann die jeweilige komplette Matrix, welche die Transfereinrichtung 144 bzw. 144A bildet, ohne Einhausung und Sicherheitseinrichtungen wie z.B. Lichtschranken auskommen.

Im unteren Bereich befindet sich ein Grundrahmen, auf dem sowohl die Dreh-/Transporteinrichtungen 144a, 144b, 144c, ... 144i, 144j 144k, 1441 und 144Za, 144Zb, 144Zc, 144Zd, 171a, 171b; 172a, 172b als auch die Transporteinrichtungen 161a, 161b, ... 161i, 162a, 162b, ... 162i, 163a, 163b, ...163i, 161Zd, 161Ze, 163Zd, 163Ze montiert sind. Auf einer Höhe in Bezug auf die Bodenfläche zwischen 200 mm und 600 mm ist die komplette Medienführung von Druckluft, Stromversorgung (auch für die Prozesseinrichtungen 121, 122; 123, 124; 125, 126; ... 135, 136; 137, 138), Prozessmedien z.B. Poliermittel und weiteres integriert.

Alle Dreh-/Transporteinrichtungen (Matrix-Einzelmodule) 144a, 144b, 144c, ... 144i, 144j 144k, 144l und 144Za, 144Zb, 144Zc, 144Zd sowie 171a, 171b; 172a, 172b weisen Steckverbindungen für Mechanik, Stromversorgung, Pneumatik, Sensorik/Steuerung (SPS) usw. auf, so dass diese schnell getauscht und wieder in Betrieb genommen werden können. So sind kurze Unterbrechungen sichergestellt.

Die Erfinder haben erkannt, dass es günstig ist, die Transportrichtungen 101a, 103a der äußeren Transportspuren 101, 103 nicht zu ändern und diese vielmehr in Richtung zunehmender Wertschöpfung zu belassen. Konkret schlagen die Erfinder vor, dass die Transportrichtung 101a der linken äußeren Transportspur 101 nicht umkehrbar ist und dass die Transportrichtung 103a der rechten äußeren Transportspur 103 nicht umkehrbar ist. Auch die Transportrichtung 102 der mittleren Transportspur 102 kann nicht umkehrbar ausgestaltet sein. Nicht umkehrbar meint in diesem Zusammenhang im Regelbetrieb insbesondere während des gesamten Prozesszyklus in Bezug auf die Prozessierung eines Brillenglasrohlings zum fertigen Brillenglas bzw. zum nicht weiter in dem Herstellungssystem 100 zu prozessierenden Brillenglasrohling. Der Begriff nicht umkehrbar bezieht sich nicht auf den Wartungs- oder Testbetrieb, sondern betrifft lediglich den regulären Herstellprozess. Ist die Transportrichtung umkehrbar, so bedeutet dies nicht zwangsläufig, dass die Transportrichtung über der gesamten Transportspur umgekehrt wird. Vielmehr kann auch die Transportrichtung innerhalb einzelner Abschnitte, insbesondere auf einem oder mehreren Transporteinrichtungen und/oder auf einem oder mehreren Dreh-/Transporteinrichtungen umgekehrt werden.

Bei der in der Figur 3 gezeigten Ausführungsvariante ist die jeweilige Transportrichtung 101Za, 102a, 102b der Transporteinrichtungen 161Zd, 162d, 162e entgegen der Wertschöpfungsrichtung und insbesondere entgegen der jeweiligen Transportrichtung 101a, 101Zb, 103Za, 103Zb, 103a der übrigen Transporteinrichtungen 161d, 161e, 161Ze, 163Zd, 163Ze, 163d, 163e. Diese umgekehrte Transportrichtung 161Zd, 162d, 162e erfolgt überwiegend aufgrund der Notwendigkeit einer Nacharbeit oder zum Zweck des Rücktransports von leeren Transportbehältern.

Das Betriebsverfahren für das gesamte Herstellungssystem 100 -natürlich auch in jeglicher Abwandlung und insbesondere in der in der Figur 3 skizzierten und vorstehend beschriebenen Variante- ist computerimplementiert und wird über ein entsprechendes Computerprogramm mit Programmcode, welches sich auf dem Computer, nämlich insbesondere repräsentiert durch die Recheneinrichtung 180 und die Steuereinrichtung 182, befindet und dessen Prozessoren realisiert.

Es umfasst die Steuerung des Transfers der Transportbehälter zwischen den oben beschriebenen Transportspuren 101, 101Z, 102, 103Z, 103 und das Zu- und Abführen zu einer jeweiligen Prozesseinrichtung 121, 122; 123, 124; 125, 126; ... 135, 136; 137, 138.

Das Computerprogramm umfasst auch Steuerbefehle für den Antrieb der Transporteinrichtungen 161a, 161b, ... 161i, 162a, 162b, ... 162i, 163a, 163b, ...163i, 161Zd, 161Ze, 163Zd, 163Ze, insbesondere der Doppelförderbänder. Es umfasst weiter die Steuerbefehle für den Transportantrieb (z.B. Doppelförderbänder) und den Drehantrieb (z.B. einen Schrittmotor) der oben beschriebenen Dreh-/Transporteinrichtungen 144a, 144b, 144c, ... 144i, 144j 144k, 144l und 144Za, 144Zb, 144Zc, 144Zd sowie 171a, 171b; 172a, 172b.

Das Computerprogramm weist einen Algorithmus auf, welcher zur Berechnung des oben beschriebenen kürzesten oder schnellsten Transportwegs dient. Die Logistikregeln sind algorithmisch so berechnet, dass die Transporteinrichtungen 161a, 161b, ... 161i, 162a, 162b, ... 162i, 163a, 163b, ...163i, 161Zd, 161Ze, 163Zd, 163Ze und die Dreh-/Transporteinrichtungen 144a, 144b, 144c, ... 144i, 144j 144k, 144l und 144Za, 144Zb, 144Zc, 144Zd selbstregelnd und autonom funktionieren und sich sogar auf den jeweiligen zulässigen Herstellungszustand WIP (work in production) des jeweiligen Brillenglasrohlings einschwingen. Regeln wie "schnellster Weg zur nächsten Station" oder "kürzester Weg" oder "Vollgut hat Vorfahrt" sind vorgegeben. Für die Suche nach dem besten Weg kommen spezielle Algorithmen zur Anwendung, die die jeweils nächsten Zustände der Transporteinrichtungen 161a, 161b, ... 161i, 162a, 162b, ... 162i, 163a, 163b, ...163i, 161Zd, 161Ze, 163Zd, 163Ze und der Dreh-/Transporteinrichtungen 144a, 144b, 144c, ... 144i, 144j 144k, 144l und 144Za, 144Zb, 144Zc, 144Zd sowie 171a, 171b; 172a, 172b betrachten und per algorithmischer Berechnung den nächsten Weg für die Transportbehälter vorgeben. Die Dreh-/Transporteinrichtungen 144a, 144b, 144c, ... 144i, 144j 144k, 144l und 144Za, 144Zb, 144Zc, 144Zd sowie 171a, 171b; 172a, 172b nutzen dabei auch die Möglichkeit des flexiblen, diagonalen Fahrens, welches mittels der algorithmischen Berechnung entschieden wird.

Dabei können sich eine ganze Zahl n Transportbehälter auf einer Dreh-/Transporteinrichtung 144a, 144b, 144c, ... 144i, 144j 144k, 144l und 144Za, 144Zb, 144Zc, 144Zd sowie 171a, 171b; 172a, 172b befinden. Die Auflagefläche für die Transportbehälter auf einer Dreh-/Transporteinrichtung 144a, 144b, 144c, ... 144i, 144j 144k, 144l und 144Za, 144Zb, 144Zc, 144Zd sowie 171a, 171b; 172a, 172b, welche im vorliegenden Ausführungsbeispiel durch die Gurtbänder 202a, 202b festgelegt ist, ist so gewählt, dass ein oder mehrere Transportbehälter Platz finden.

Mittels neuronaler Netze werden von einem stirnseitigen Puffer 104a (siehe Figur 1) die Brillenglasrohlinge ideal eingesteuert und der Aufnahmestelle 104 (zusammen mit entsprechenden Transportbehältern) zugeführt. Dabei werden jeweils die Zustände der Prozesseinrichtungen 121, 122; 123, 124; 125, 126; ... 135, 136; 137, 138, die Zustände der in diesen Prozesseinrichtungen 121, 122; 123, 124; 125, 126; ... 135, 136; 137, 138 verwendeten Werkzeuge, anstehende Wartungen oder auch günstigste Prozesseinrichtungs- und Auftragspaare berücksichtigt. Die Aufträge werden mit der jeweils günstigsten Auftrag-/Prozesseinrichtungskombination in die Fertigung eingesteuert. Der eingestellt WIP und vorliegende Kanban-Signale stellen dabei eine weitere Einflussgröße bei der Einsteuerung und auch der Belegung der Fördertechnik und Auslastung der Prozesseinrichtungen 121, 122; 123, 124; 125, 126; ... 135, 136; 137, 138 dar.

Aufgrund der von der Recheneinrichtung 180 durchgeführten algorithmischen Berechnung ist es möglich, dass über eine entsprechende Sensorik oder manuell identifizierte defekte Dreh-/Transporteinrichtungen 144a, 144b, 144c, ... 144i, 144j 144k, 144l und 144Za, 144Zb, 144Zc, 144Zd sowie 171a, 171b; 172a, 172b und ggf. auch Transporteinrichtungen 161a, 161b, ... 161i, 162a, 162b, ... 162i, 163a, 163b, ...163i, 161Zd, 161Ze, 163Zd, 163Ze automatisch und selbstregelnd umfahren werden, da diese bereits bei der Suche nach dem kürzesten bzw. schnellsten Weg ausgeblendet werden. Die Recheneinrichtung 180 weist zu diesem Zweck eine Schnittstelle auf, über die diese Information zugeführt werden kann.

Nach Austausch des defekten Moduls (Dreh-/Transporteinrichtungen 144a, 144b, 144c, ... 144i, 144j 144k, 1441 und 144Za, 144Zb, 144Zc, 144Zd sowie 171a, 171b; 172a, 172b oder Transporteinrichtungen 161a, 161b, ... 161i, 162a, 162b, ... 162i, 163a, 163b, ...163i, 161Zd, 161Ze, 163Zd, 163Ze) bzw. der defekten Module, nutzt das Herstellungssystem 100 automatisch diese Module wieder mit. Hierzu wird ein Statustag genutzt, der z.B. von einer in der Figur 5 gezeigten Statusmeldeeinrichtung 220 in der Dreh-/Transporteinrichtung 144b gesetzt wird.

Aufträge können von z.B. laufenden Produktions- oder Nacharbeitsaufträgen überholt werden. Transportbehälter können an beliebiger Stelle aus dem Herstellungssystem 100 entnommen werden z.B. für manuelle Eingriffe, können aber auch genauso wieder an jeder beliebigen Stelle aufgesetzt werden. Das Herstellungssystem 100 erkennt unmittelbar die ID Kennung des Auftrags mit Hilfe der an dem Drehpunkt 206 angebrachten RFID Lesestation 210 und passt seine Regelung autark (ohne menschlichen Eingriff) an.

Die Aufträge werden unter anderem mittels Kanban-Signale an eine nächste Station (Transporteinrichtung, Dreh-/Transporteinrichtung, Prozesseinrichtung etc.) weitergeleitet. Diese Kanban-Signale sind mit Zeitplangebern versehen, die es ermöglichen, einen Auftrag im Falle einer Störung selbstständig aus den Prozesseinrichtungen herauszufahren, um an eine andere freie Prozesseinrichtung weitergeleitet zu werden. All dies erfolgt ohne einen menschlichen Eingriff und durch ein selbstregelndes im Computer realisiertes System.

Durch all diese Vorgaben ist es dem Herstellungssystem 100 möglich, dass die Aufträge entweder in Bewegung oder in einer der Prozesseinrichtungen in Bearbeitung sind und somit der ideale WIP eingestellt ist und eine Durchlaufgeschwindigkeit von bis zu 1,2 Mal der Summe aller Prozesszeiten möglich ist.
Das Gesamtlayout ist in der in der Figur 1 gezeigten Variante in drei Kreisläufe verknüpft, wobei jeder in einem sogenannten ConWIP (controlled work in production) geregelt ist. Darüber hinaus werden Kanban-Signale nur innerhalb der Kreisläufe genutzt, dies ergibt eine Hybridsteuerung, was einen idealen Durchsatz / Durchlaufzeit ermöglicht.

Eine komplett geradlinige Anordnung der Transportspuren wie in der Figur 1 gezeigt ist die schnellste Variante, allerdings lassen sich jederzeit U- / L-Formen und Polygonzüge ermöglichen. Bezeichnend für die o.a. Layoutformationen ist, dass die Transportrichtung für Vollgut immer eingehalten wird und lediglich Leergut, Nacharbeit oder ggf. Ausschuss in entgegengesetzter Richtung transportiert wird.

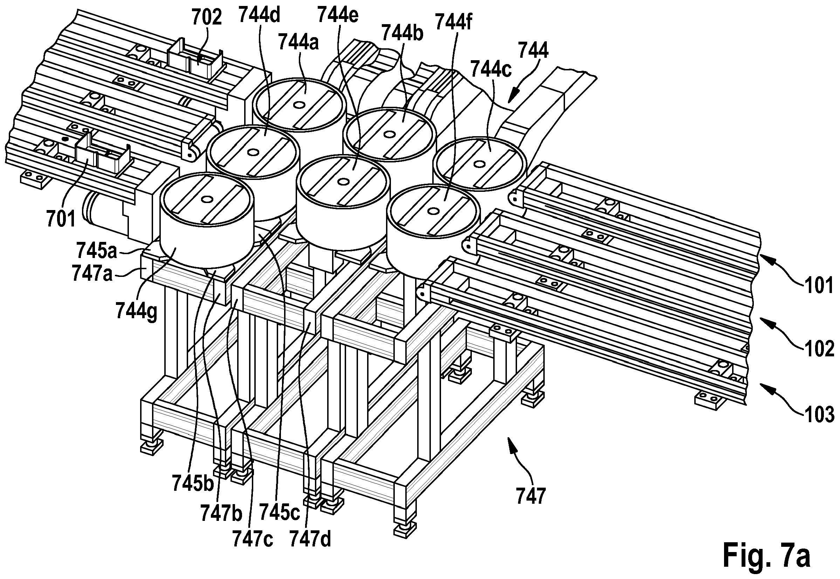

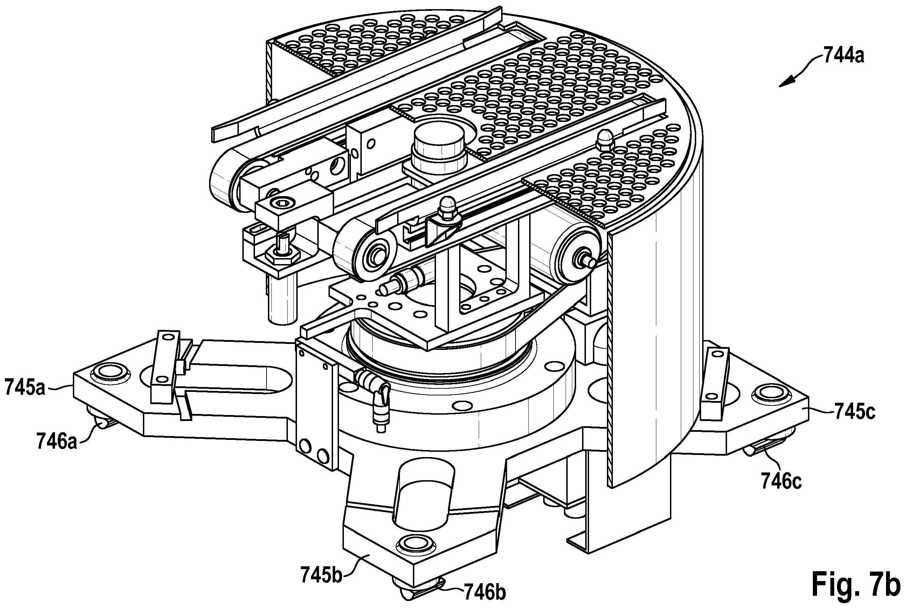

Anhand der Figuren 7 a) und b) wird nachfolgend der modulare Aufbau einer erfindungsgemäßen Transfereinrichtung erläutert. Die Figur 7 a) zeigt einen Ausschnitt aus einem Herstellungssystem der in der Figur 1 gezeigten Art. Das Herstellungssystem umfasst drei nebeneinander angeordnete Transportspuren 101, 102, 103 zum Transport von Brillenglasrohlingen in Transportbehältern 701, 702 und eine erfindungsgemäße Transfereinrichtung 744 mit einer Mehrzahl an Dreh-/Transporteinrichtungen 744a, 744b, 744c, 744d, 744e, 744f, 744g der in den Figuren 5 und 6 gezeigten Art. Die Dreh-/Transporteinrichtungen 744a, 744b, 744c, 744d, 744e, 744f, 744g weisen Kopplungseinrichtungen 745a, 745b, 745c auf, welche komplementär zu Trageschienen 747a, 747b, 747c, 747d eines Rahmens 747 ausgebildet sind, welche mit Hilfe von Schrauben/Mutter-Verbindungen 746a, 746b, 746c miteinander verbunden werden können. Alternativ ist es auch möglich, komplementär zueinander ausgebildete Kopplungseinrichtungen seitlich an den jeweiligen Dreh-/Transporteinrichtungen 744a, 744b, 744c, 744d, 744e, 744f, 744g anzubringen und diese direkt miteinander zu koppeln.

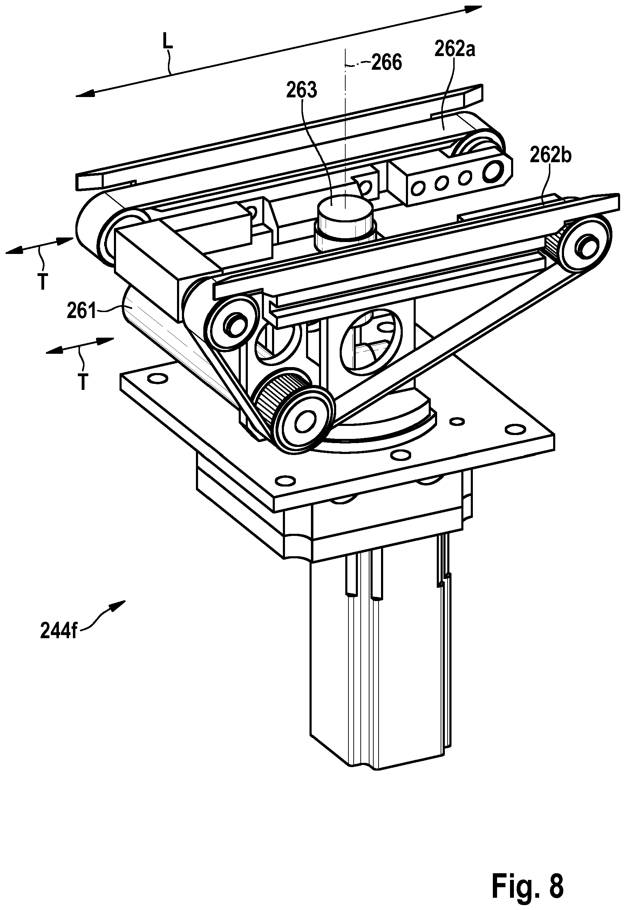

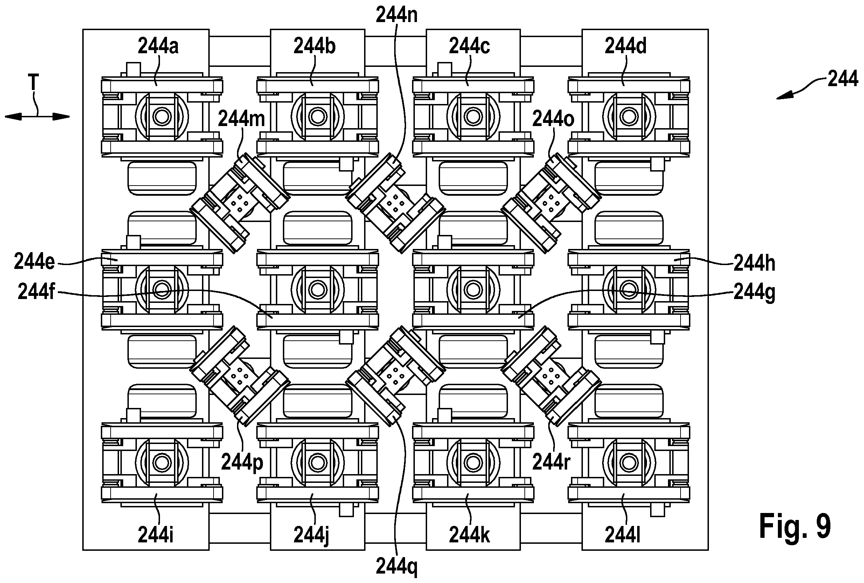

Die Figur 9 zeigt in Draufsicht von oben eine weitere alternative Ausführungsvariante einer Transfereinrichtung 244 mit zwölf identisch ausgebildeten Dreh-/Transporteinrichtungen 244a, 244b, 244c ...244i, 244j, 244k, 2441, von denen eine, nämlich die Dreh-/Transporteinrichtung 244f in der Figur 8 exemplarisch in perspektivischer Ansicht wiedergegeben ist, sowie weiteren sechs identisch ausgeführten Dreh-/Transporteinrichtungen 244m, 244n, 244o, 244p, 244q, 244r.

Die Dreh-/Transporteinrichtungen 244a, 244b, 244c ...244i, 244j, 244k, 2441 sind in Form einer 3 x 4 - Matrix angeordnet. Die vier Dreh-/Transporteinrichtungen 244a, 244b, 244c, 244d der Transfereinrichtung 244 gehören zu einer linken äußeren Transportspur, die vier Dreh-/Transporteinrichtungen 244e, 244f, 244g, 244h gehören zu einer mittleren Transportspur und die vier Dreh-/Transporteinrichtungen 244i, 244j, 244k, 2441 gehören zu einer rechten äußeren Transportspur. Die Dreh-/Transporteinrichtungen 244m, 244n, 244o, 244p, 244q, 244r sind ebenfalls in der Form einer Matrix angeordnet, nämlich als 2 x 3 - Matrix. Die 2 x 3 - Matrix durchsetzt die 3 x 4 Matrix oder anders ausgedrückt sind die Dreh-/Transporteinrichtungen 244m, 244n, 244o, 244p, 244q, 244r an den Eckpunkten der Zellen der 3 x 4 Matrix, in denen sich die Dreh-/Transporteinrichtungen 244a, 244b, 244c ...244i, 244j, 244k, 244l befinden, angeordnet. Die Dreh-/Transporteinrichtungen 244a, 244b, 244c ...244i, 244j, 244k, 2441 umgekehrt sind an den Eckpunkten der Zellen der 2 x 3 - Matrix, in denen sich die Dreh-/Transporteinrichtungen 244m, 244n, 244o, 244p, 244q, 244r befinden, die Dreh-/Transporteinrichtungen 244a, 244b, 244c ...244i, 244j, 244k, 2441 angeordnet.

Die Dreh-/Transporteinrichtung 244f umfasst genauso wie die baugleichen Dreh-/Transporteinrichtungen 244a, 244b, 244c ...244i, 244j, 244k, 2441 grundsätzlich eine Transporteinrichtung mit motorischem Antrieb 261 in miniaturisierter Ausführung und zwei Gurtbändern 262a, 262b. Darüber hinaus verfügt die Dreh-/Transporteinrichtung 244f über eine Dreheinrichtung mit motorischem Antrieb 263, der die Transporteinrichtung drehend um eine vertikale Achse 266 antreiben und so die Transportrichtung T der beiden Gurtbänder 262a, 262b ändern kann. Die Dreh-/Transporteinrichtung 244f ermöglicht zum Einen den Transport eines Transportbehälters in der in der Figur 8 gezeigten Transportrichtung T und zum Anderen nach entsprechender Drehung den Transport des Transportbehälters zu einer benachbarten Transportspur oder zu einer benachbarten Prozesseinrichtung.

Die Dreh-/Transporteinrichtungen 244m, 244n, 244o, 244p, 244q, 244r sind im Ausführungsbeispiel weitgehend baugleich zu den Dreh-/Transporteinrichtungen 244a, 244b, 244c ...244i, 244j, 244k, 2441. Die Dreh-/Transporteinrichtungen 244m, 244n, 244o, 244p, 244q, 244r unterscheiden sich lediglich in der Baulänge L. Ähnlich die die Dreh-/Transporteinrichtungen 144a, 144b, 144c, ... 144i, 144j 144k, 1441 und 144Za, 144Zb, 144Zc, 144Zd, 144Ze, 144Zf, 144Zg, 144Zh sowie 171a, 171b; 172a, 172b sind die Dreh-/Transporteinrichtungen 244a, 244b, 244c ...244i, 244j, 244k, 2441 und 244m, 244n, 244o, 244p, 244q, 244r in diskreten 45°-Schritten ausrichtbar.

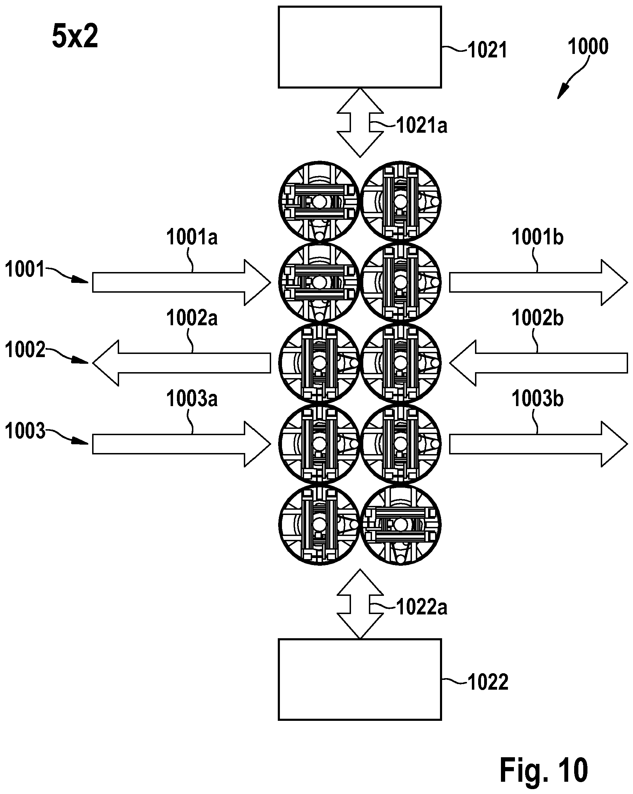

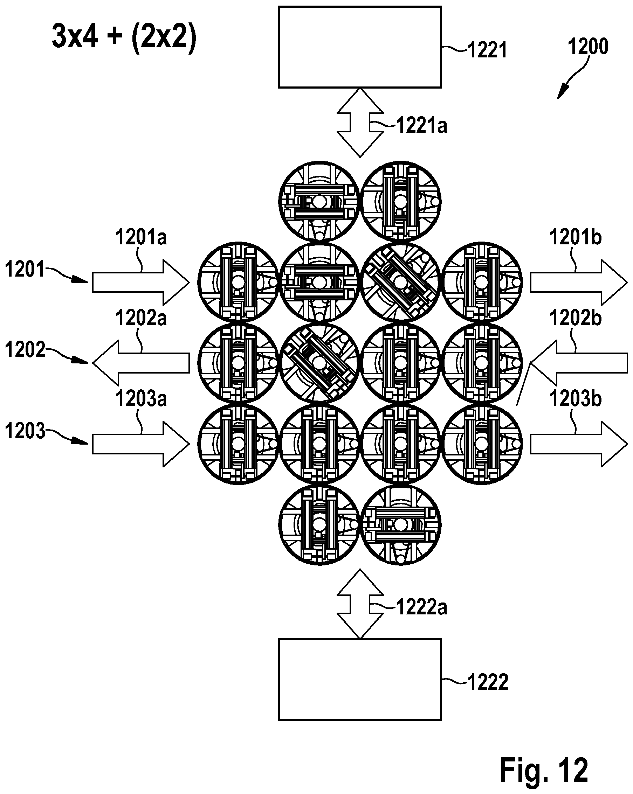

Die Figuren 10, 11, 13, 14 und 16 zeigen nicht zur Erfindung gehörende vierte, fünfte, siebte, achte und zehnte Ausführungsbeispiele einer Transfereinrichtung. Die Figuren 12, 15 und 17 zeigen sechste, neunte und elfte Ausführungsvarianten einer erfindungsgemäßen Transfereinrichtung.

Figur 10 zeigt eine nicht zur Erfindung gehörende Transfereinrichtung 1000 in Form einer 5 x 2 -Matrix. Die Bezugszeichen 1001, 1002, 1003 bezeichnen drei Transportspuren, die Bezugszeichen 1001a, 1001b, 1002a, 1002b, 1003a und 1003b zeigen die Transportrichtungen der die Transportspuren 1001, 1002, 1003 definierenden Transporteinrichtungen. Die Doppelpfeile mit den Bezugszeichen 1021a, 1022a geben die Transportrichtungen zu den Prozessstationen 1021, 1022 an.

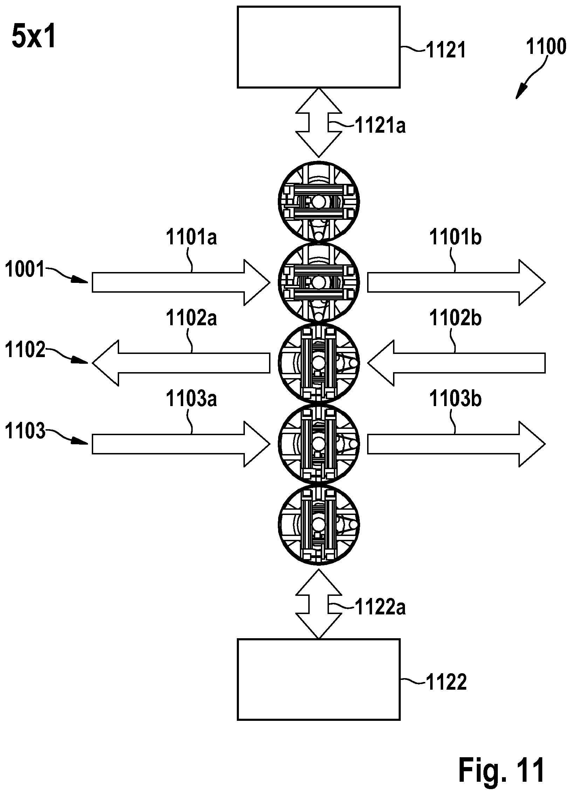

Die Figur 11 zeigt eine nicht zur Erfindung gehörende Transfereinrichtung 1100 in Form einer 5 x 1 - Matrix. Die Bezugszeichen 1101, 1102, 1103 bezeichnen drei Transportspuren, die Bezugszeichen 1101a, 1101b, 1102a, 1102b, 1103a und 1103b zeigen die Transportrichtungen der die Transportspuren 1101, 1102, 1103 definierenden Transporteinrichtungen. Die Doppelpfeile mit den Bezugszeichen 1121a, 1122a geben die Transportrichtungen zu den Prozessstationen 1121, 1122 an.

Die Figur 12 zeigt eine Transfereinrichtung 1200 in Form einer 3 x 4 + (2 x 2) - Matrix. Die Bezugszeichen 1201, 1202, 1203 bezeichnen drei Transportspuren, die Bezugszeichen 1201a, 1201b, 1202a, 1202b, 1203a und 1203b zeigen die Transportrichtungen der die Transportspuren 1201, 1202, 1203 definierenden Transporteinrichtungen. Die Doppelpfeile mit den Bezugszeichen 1221a, 1222a geben die Transportrichtungen zu den Prozessstationen 1221, 1222 an.

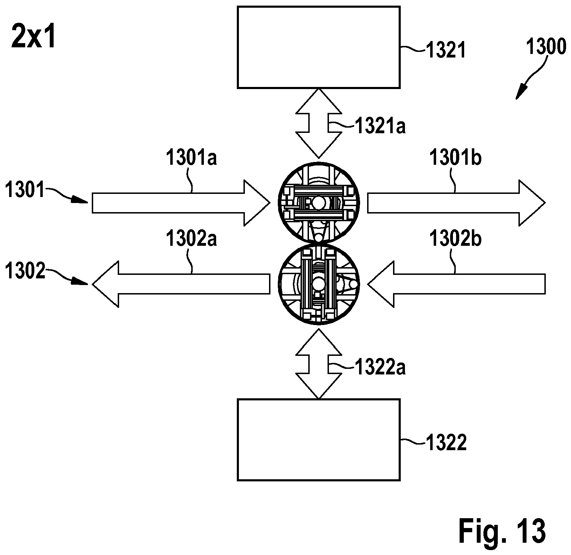

Die Figur 13 zeigt eine nicht zur Erfindung gehörende Transfereinrichtung 1300 in Form einer 2 x 1 - Matrix. Die Bezugszeichen 1301, 1302 bezeichnen zwei Transportspuren, die Bezugszeichen 1301a, 1301b, 1302a, 1302b zeigen die Transportrichtungen der die Transportspuren 1301, 1302 definierenden Transporteinrichtungen. Die Doppelpfeile mit den Bezugszeichen 1321a, 1322a geben die Transportrichtungen zu den Prozessstationen 1321, 1322 an.

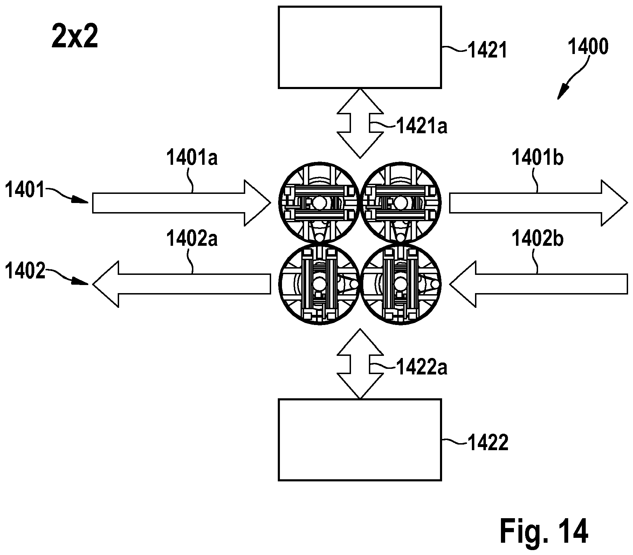

Die Figur 14 zeigt eine nicht zur Erfindung gehörende Transfereinrichtung 1400 in Form einer 2 x 1 - Matrix. Die Bezugszeichen 1401, 1402 bezeichnen zwei Transportspuren, die Bezugszeichen 1301a, 1301b, 1402a, 1402b zeigen die Transportrichtungen der die Transportspuren 1401, 1402 definierenden Transporteinrichtungen. Die Doppelpfeile mit den Bezugszeichen 1421a, 1422a geben die Transportrichtungen zu den Prozessstationen 1421, 1422 an.

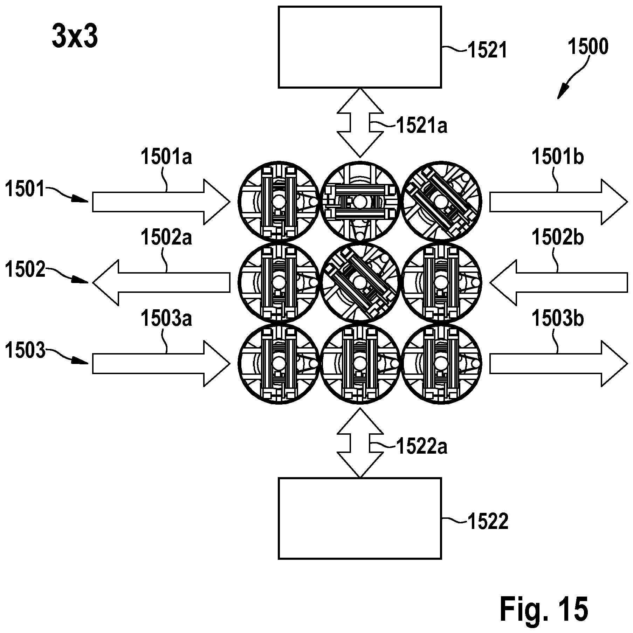

Die Figur 15 zeigt eine Transfereinrichtung 1500 in Form einer 3 x 3 - Matrix. Die Bezugszeichen 1501, 1502, 1503 bezeichnen drei Transportspuren, die Bezugszeichen 1501a, 1501b, 1502a, 1502b, 1503a und 1503b zeigen die Transportrichtungen der die Transportspuren 1501, 1502, 1503 definierenden Transporteinrichtungen. Die Doppelpfeile mit den Bezugszeichen 1521a, 1522a geben die Transportrichtungen zu den Prozessstationen 1521, 1522 an.

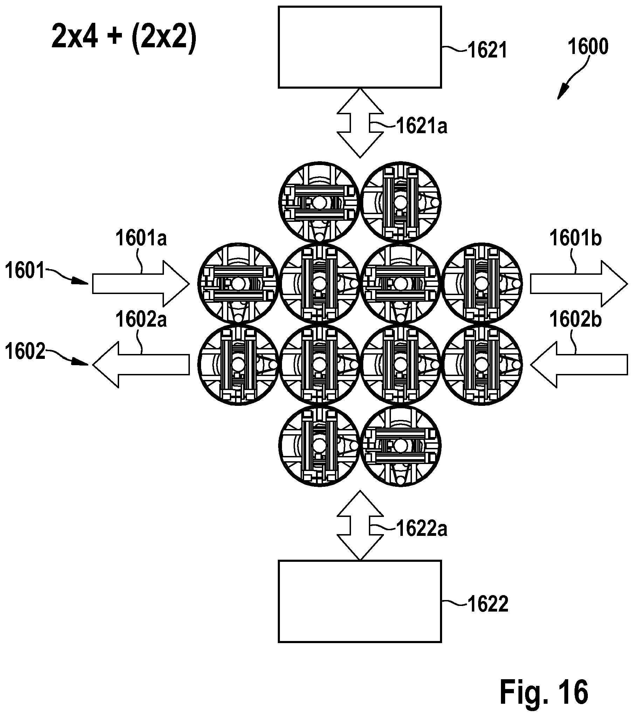

Die Figur 16 zeigt eine nicht zur Erfindung gehörende Transfereinrichtung 1600 in Form einer 2 x 4 + (2 x 2) - Matrix. Die Bezugszeichen 1601, 1602 bezeichnen zwei Transportspuren, die Bezugszeichen 1601a, 1601b, 1602a, 1602b zeigen die Transportrichtungen der die Transportspuren 1601, 1602 definierenden Transporteinrichtungen. Die Doppelpfeile mit den Bezugszeichen 1621a, 1622a geben die Transportrichtungen zu den Prozessstationen 1621, 1622 an.

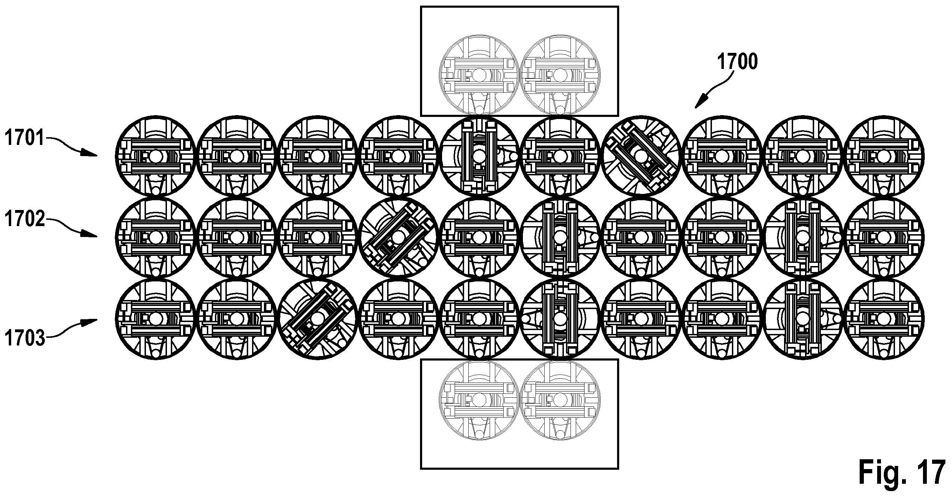

Die Figur 17 zeigt eine Transfereinrichtung 1700 in Form einer 3 x 10 + (2 x 2) - Matrix. Die Bezugszeichen 1701, 1702, 1703 bezeichnen drei Transportspuren.

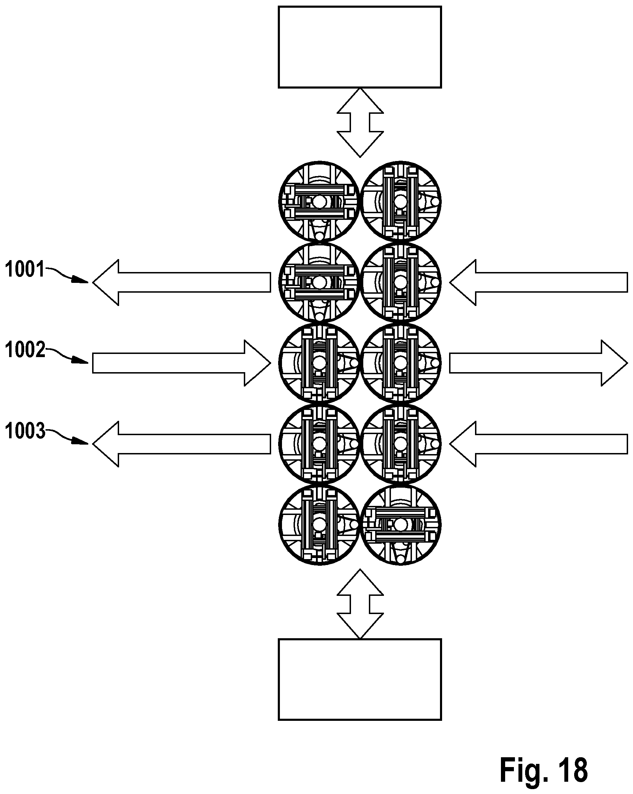

Die Figuren 18 bis 22 zeigen unterschiedliche Möglichkeiten für den Transportbehältertransport anhand der nicht zur Erfindung gehörenden Transfereinrichtung 1000 nach der Figur 10 (siehe die dortigen Bezugszeichen).

Die Figur 18 zeigt gerade den umgekehrten Massenfluss wie in der Figur 10. Über die äußeren Transportspuren 1001, 1003 erfolgt der Leer- und/oder Nacharbeitstransport, wohingegen über die mittlere Transportspur 1002 die Wertschöpfung erfolgt.

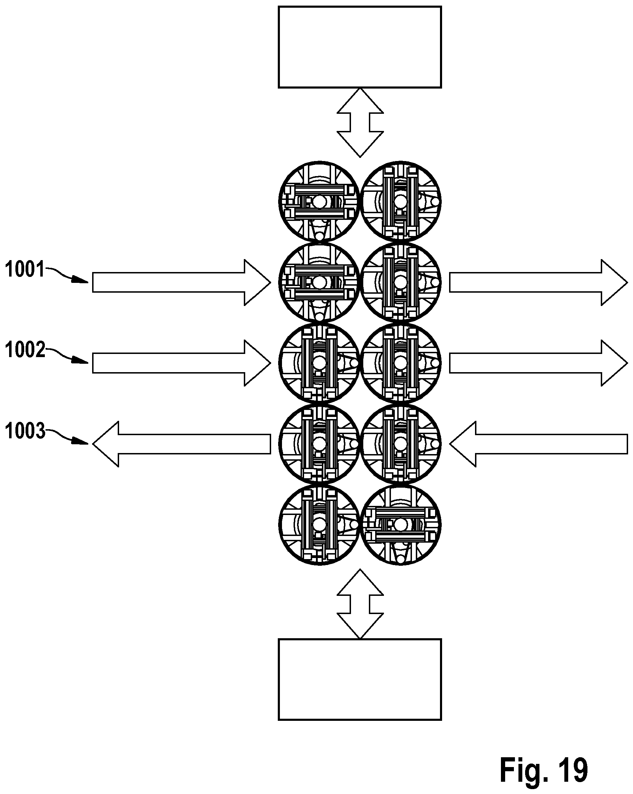

Bei den in der Figur 19 gezeigten Transportrichtungen erfolgt die Wertschöpfung in der linken und mittleren Transportspur 1001, 1002. Die rechte Transportspur 1003 ist für den Rücktransport von leeren Transportbehältern oder zur Nachbearbeitung vorgesehen.

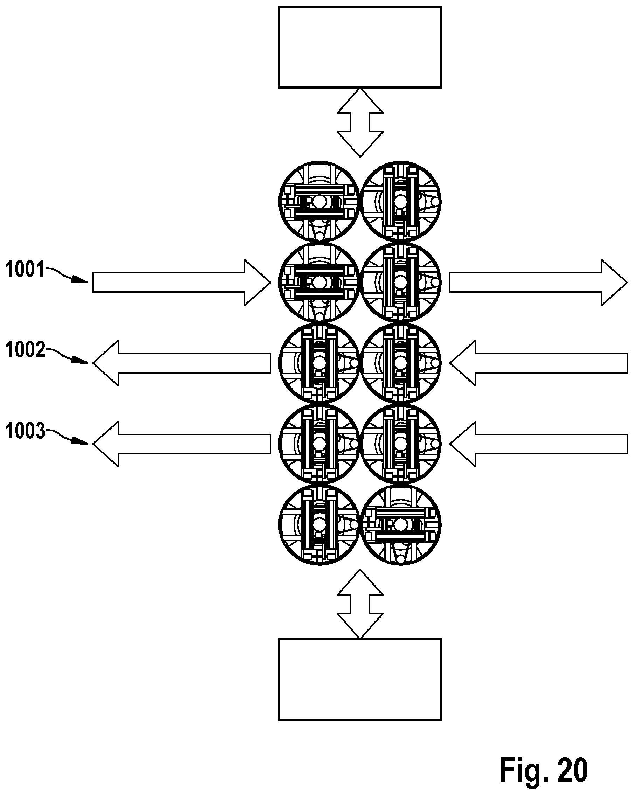

Die Figur 20 zeigt eine Konfiguration, bei der die linke Transportspur 1001 allein für den Wertschöpfungstransport vorgesehen ist, während die mittlere und rechte Transportspuren 1002, 1003 für den Leer- und Nacharbeitungstransfer vorgesehen sind.

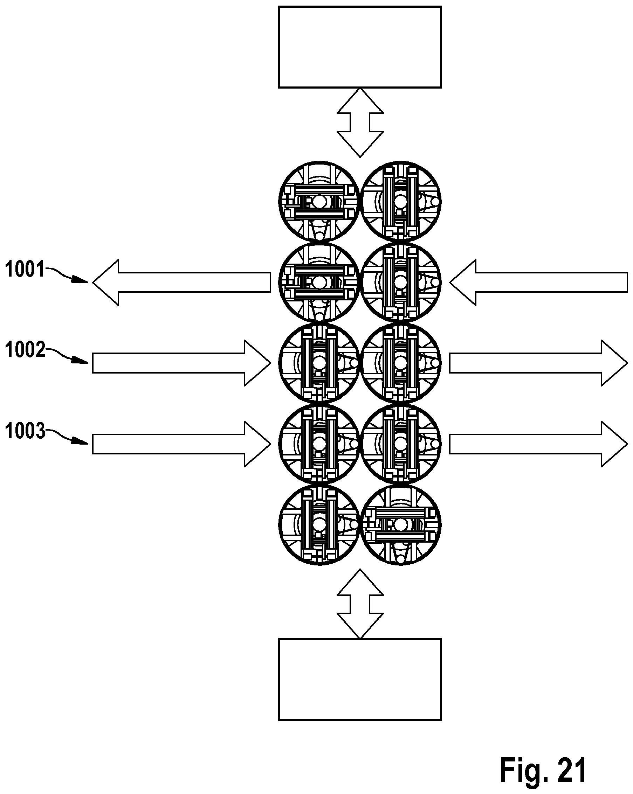

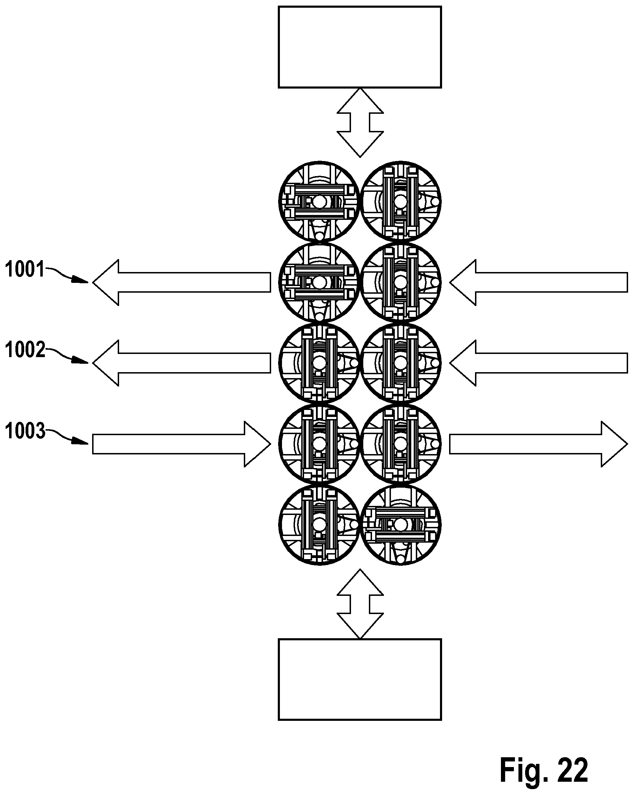

Die Figur 21 zeigt die gespiegelte Anordnung zur Figur 19 und die Figur 22 zeigt die gespiegelte Anordnung zur Figur 20.

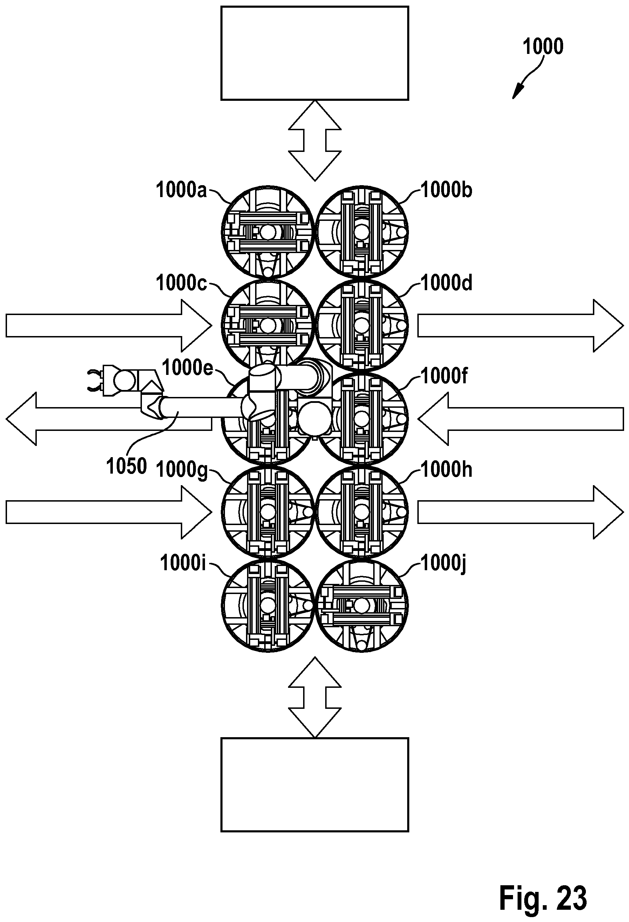

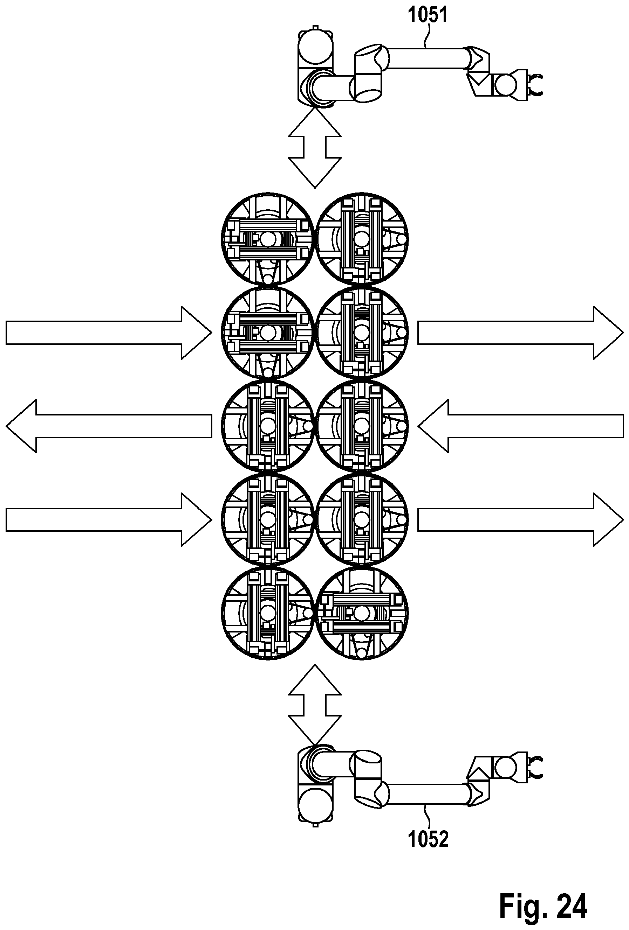

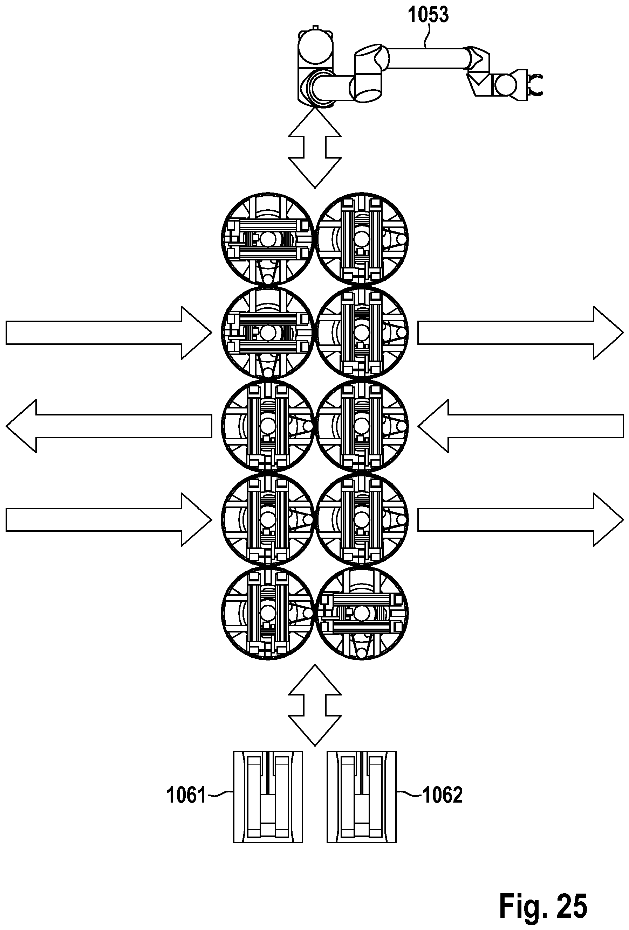

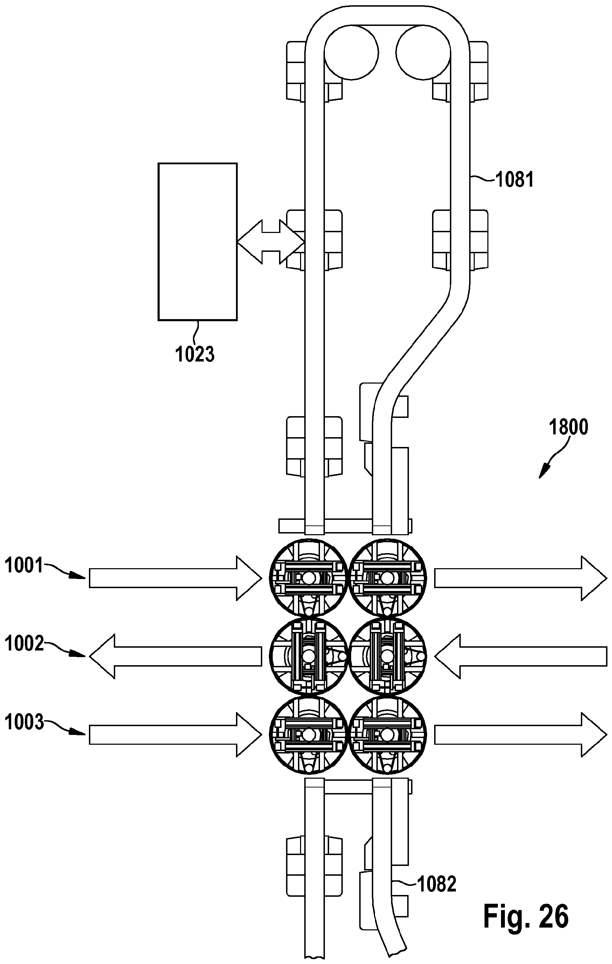

Die Figuren 23 bis 25 zeigen die nicht zur Erfindung gehörende Transfereinrichtung 1000 nach der Figur 10, bei der zusätzlich Roboter vorgesehen sind. Die Figur 23 zeigt eine Konfiguration, bei der ein zentraler Roboter 1050 vorhanden ist. Dieser kann für eine zentrale Bestückung der Prozesseinrichtungen 1021, 1022 und/oder der einzelnen Dreh-/Transporteinrichtungen 1000a, 1000b, 1000c, .... 1000i, 1000j verwendet werden. Die Figur 24 zeigt eine Konfiguration, bei der zwei dezentrale Roboter 1051, 1052 vorhanden sind. Diese können für eine dezentrale Bestückung der Prozessstationen 1021, 1022 und/oder der einzelnen Dreh-/Transporteinrichtungen 1000a, 1000b, 1000c, .... 1000i, 1000j verwendet werden. Die Figur 25 zeigt eine Konfiguration, bei der ein dezentrale Roboter 1053 vorhanden ist. Dieser kann für eine dezentrale Bestückung der Prozesseinrichtungen 1021, 1022 und/oder der einzelnen Dreh-/Transporteinrichtungen 1000a, 1000b, 1000c, .... 1000i, 1000j verwendet werden. Andernendseitig sind zwei Transporteinrichtungen 1061, 1062 vorhanden, über die die rechte Prozesseinrichtung 1022 beliefert werden kann. Außer dem Umsetzen des Transportbehälters kann über diese Anordnung auch eine Anbindung an eine konventionelle Fördertechnik erfolgen, wie dies in der Figur 26 weiter ausgeführt ist.

Die Figur 26 zeigt eine nicht zur Erfindung gehörende dreizehnte Ausführungsvariante einer Transfereinrichtung 1800 in Form einer 3 x 2 - Matrix. mit einer zweiseitigen Anbindung an eine konventionelle Fördertechnik. Linksseitig und rechtsseitig der Transfereinrichtung 1800 sind konventionelle Förderstrecken 1081, 1082 angeordnet, über die Prozesseinrichtungen 1023 angefahren werden können.

## Patentansprüche

1. Verwendung einer Transfereinrichtung (140, 141, 142, ... 149, 144A, 244, 744, 1000, 1100, 1200, ... 1700, 1800) für einen Transportbehälter (701, 702) für Brillengläser oder Brillenglasrohlinge, wobei die Transfereinrichtung (140, 141, 142, ... 149, 144A, 244, 744, 1000, 1100, 1200, ... 1700, 1800)
- in Form einer 3x2-Matrix unmittelbar aneinander angrenzend angeordneten Dreh-/Transporteinrichtungen (144a, 144b, 144c, ... 144i, 144j 144k, 1441, 144Za, 144Zb, ...244a, 244b, ... 744a, 1000a, 1000b ...) ausgebildet ist, wobei die 3x2-Matrix einen Aufbau in der Art einer Tabelle mit 3 Zeilen und 2 Spalten zuordenbaren Feldern oder Zellen definiert, wobei die Dreh-/Transporteinrichtungen in Draufsicht wie die Felder oder Zellen der 3 Zeilen und der 2 Spalten aufweisenden Tabelle angeordnet sind, wobei
- jede der Dreh-/Transporteinrichtungen (144a, 144b, 144c, ... 144i, 144j 144k, 144l, 144Za, 144Zb, ...244a, 244b, ... 744a, 1000a, 1000b ...) eine Auflage (202a, 202b) mit einer Auflagefläche für den Transportbehälter (701, 702) aufweist, wobei die Auflagefläche Platz für einen oder mehrere Transportbehälter (701, 702) bietet, wobei die Auflage (202a, 202b) wenigstens als Dreipunktauflage ausgebildet ist, wobei die Auflage (202a, 202b) durch ein oder mehrere Gurtförderbänder (202a, 202b), durch ein oder mehrere Gliederketten, durch einen oder mehrere Riemen oder durch mehrere Rollen gebildet ist, wobei
- jede der unmittelbar aneinander angrenzend angeordneten Dreh-/Transporteinrichtungen (144a, 144b, 144c, ... 144i, 144j 144k, 144l, 144Za, 144Zb, ...244a, 244b, ... 744a, 1000a, 1000b ...) der 3x2-Matrix einen eigenen Antrieb (203, 263) zum Drehen und einen eigenen Antrieb (201, 261) zum Transportieren aufweist, wobei
- jede der 3 Zeilen der 3x2-Matrix Bestandteil einer eigenen Transportspur (101, 102, 103), nämlich einer linken äußeren Transportspur (101), einer mittleren Transportspur (102) und einer rechten äußeren Transportspur (103), ist, längs der der Transportbehälter (701, 702) transportiert wird, wobei
- der Transfereinrichtung (140, 141, 142, ... 149, 144A, 244, 744, 1000, 1100, 1200, ... 1700, 1800) zwei, ein Prozesseinrichtungspaar (121, 122; 123, 124; 125, 126 ... 137, 138) bildende Prozesseinrichtungen (121, 122, ... 137, 138) zugeordnet sind, welche in Bezug auf die Transfereinrichtung (140, 141, 142, ... 149, 144A, 244, 744, 1000, 1100, 1200, ... 1700, 1800) einander gegenüber liegend angeordnet sind,
- wobei die Transfereinrichtung (140, 141, 142, ... 149, 144A, 244, 744, 1000, 1100, 1200, ... 1700, 1800) einem Transfer der Brillenglasrohlinge zwischen der jeweiligen linken Prozesseinrichtung (121, 122, ... 137, 138) des Prozesseinrichtungspaars (121, 122, ... 137, 138) und der linken äußeren Transportspur (101) sowie der mittleren Transportspur (102) dienen,
- wobei die Transfereinrichtungen (140, 141, 142, ... 149, 144A, 244, 744, 1000, 1100, 1200, ... 1700, 1800) einem Transfer der Brillenglasrohlinge zwischen der jeweiligen rechten Prozesseinrichtung (121, 122, ... 137, 138) des Prozesseinrichtungspaars (121, 122, ... 137, 138) und der rechten äußeren Transportspur (103) sowie der mittleren Transportspur (102) dienen,
- wobei über die jeweils äußere Transportspur (101, 103) eine Zufuhr eines Brillenglasrohlings zur jeweils benachbarten Prozesseinrichtung zur wertschöpfenden Prozessierung erfolgt, und
- wobei die mittlere Transportspur (102) dem Rücktransport des Brillenglasrohlings zu einer in der Wertschöpfungskette vorhergehenden Prozesseinrichtung dient.

2. Verwendung der Transfereinrichtung (140, 141, 142, ... 149, 144A, 244, 744, 1000, 1100, 1200, ... 1700, 1800) nach dem vorangegangenen Anspruch, **dadurch gekennzeichnet, dass** die Auflage (202a, 202b) in diskreten Schritten ausrichtbar ist.

3. Verwendung der Transfereinrichtung (140, 141, 142, ... 149, 144A, 244, 744, 1000, 1100, 1200, ... 1700, 1800) nach Anspruch 2, **dadurch gekennzeichnet, dass** die Auflage (202a, 202b) in 45°-Schritten ausrichtbar ist.

4. Verwendung der Transfereinrichtung (140, 141, 142, ... 149, 144A, 244, 744, 1000, 1100, 1200, ... 1700, 1800) nach einem der vorangegangenen Ansprüche, **dadurch gekennzeichnet, dass** die Auflage (202a, 202b) in diskreten Orientierungen ausrichtbar ist.

5. Verwendung der Transfereinrichtung (140, 141, 142, ... 149, 144A, 244, 744, 1000, 1100, 1200, ... 1700, 1800) nach Anspruch 4, **dadurch gekennzeichnet, dass** die Auflage (202a, 202b) in genau drei diskreten Orientierungen oder in genau vier diskreten Orientierungen oder in genau fünf diskreten Orientierungen oder in genau sechs diskreten Orientierungen oder in genau sieben diskreten Orientierungen oder in genau acht diskreten Orientierungen ausrichtbar ist.

6. Verwendung der Transfereinrichtung (140, 141, 142, ... 149, 144A, 244, 744, 1000, 1100, 1200, ... 1700, 1800) nach Anspruch 1, **dadurch gekennzeichnet, dass**
- der Antrieb (203, 263) zum Drehen umkehrbar ausgebildet ist und/oder dass
- der Antrieb (201, 261) zum Transportieren umkehrbar ausgebildet ist.

7. Verwendung der Transfereinrichtung (140, 141, 142, ... 149, 144A, 244, 744, 1000, 1100, 1200, ... 1700, 1800) nach einem der vorangegangenen Ansprüche, **dadurch gekennzeichnet, dass** jede der Dreh-/Transporteinrichtungen (144a, 144b, 144c, ... 144i, 144j 144k, 1441, 144Za, 144Zb, ...244a, 244b, ... 744a, 1000a, 1000b ...) einen zu einer anderen der Dreh-/Transporteinrichtungen (144a, 144b, 144c, ... 144i, 144j 144k, 144l, 144Za, 144Zb, ...244a, 244b, ... 744a, 1000a, 1000b ...) komplementäre Kopplungseinrichtung (745a, 745b, 745c) aufweist.

8. Verwendung der Transfereinrichtung (140, 141, 142, ... 149, 144A, 244, 744, 1000, 1100, 1200, ... 1700, 1800) nach Anspruch 7, **dadurch gekennzeichnet, dass** die komplementäre Kopplungseinrichtung (745a, 745b, 745c) zu einer komplementären mechanischen Kopplung (746a, 746b, 746c) und/oder zu einer komplementären steuerungs- und/oder regelungstechnischen Kopplung ausgebildet ist.

9. Verwendung der Transfereinrichtung (140, 141, 142, ... 149, 144A, 244, 744, 1000, 1100, 1200, ... 1700, 1800) nach einem der vorangegangenen Ansprüche, **dadurch gekennzeichnet, dass** jede der Dreh-/Transporteinrichtungen (144a, 144b, 144c, ... 144i, 144j 144k, 1441, 144Za, 144Zb, ...244a, 244b, ... 744a, 1000a, 1000b ...) ein Rastermaß (R x R) zwischen 20cm x 20 cm und 50 cm x 50 cm aufweisen.

10. Verwendung der Transfereinrichtung (140, 141, 142, ... 149, 144A, 244, 744, 1000, 1100, 1200, ... 1700, 1800) nach Anspruch 9, **dadurch gekennzeichnet, dass** die Auflage (202a, 202b) höchstens 50 % einer durch das Rastermaß (R x R) definierten Fläche abdeckt.

11. Verwendung der Transfereinrichtung (140, 141, 142, ... 149, 144A, 244, 744, 1000, 1100, 1200, ... 1700, 1800) nach einem der vorangegangenen Ansprüche, **dadurch gekennzeichnet, dass** jede der Dreh-/Transporteinrichtungen (144a, 144b, 144c, ... 144i, 144j 144k, 1441, 144Za, 144Zb, ...244a, 244b, ... 744a, 1000a, 1000b ...) eine Erfassungseinrichtung (210) für den Transportbehälter (701, 702) aufweist.

12. Verwendung der Transfereinrichtung (140, 141, 142, ... 149, 144A, 244, 744, 1000, 1100, 1200, ... 1700, 1800) nach einem der vorangegangenen Ansprüche, **dadurch gekennzeichnet, dass** jede der Dreh-/Transporteinrichtungen (144a, 144b, 144c, ... 144i, 144j 144k, 1441, 144Za, 144Zb, ...244a, 244b, ... 744a, 1000a, 1000b ...) eine Statusmeldeeinrichtung (220) aufweist.

## Claims

1. Use of a transfer device (140, 141, 142, ... 149, 144A, 244, 744, 1000, 1100, 1200, ... 1700, 1800) for a transport container (701, 702) for spectacle lenses or spectacle lens blanks, wherein the transfer device (140, 141, 142, ... 149, 144A, 244, 744, 1000, 1100, 1200, ... 1700, 1800)
- is embodied in the form of a 3 x 2 matrix of directly adjoining rotation/transport devices (144a, 144b, 144c, ... 144i, 144j 144k, 144l, 144Za, 144Zb, ...244a, 244b, ... 744a, 1000a, 1000b ...), wherein the 3 x 2 matrix defines a structure in the style of a table with fields or cells that are assignable to 3 rows and 2 columns, wherein the rotation/transport devices are arranged like the fields or cells of the table containing 3 rows and 2 columns in a plan view, wherein
- each of the rotation/transport devices (144a, 144b, 144c, ... 144i, 144j 144k, 144l, 144Za, 144Zb, ...244a, 244b, ... 744a, 1000a, 1000b ...) has a bearing (202a, 202b) with a bearing surface for the transport container (701, 702), wherein the bearing surface offers space for one or more transport containers (701, 702), wherein the bearing (202a, 202b) is embodied at least as a three-point bearing, wherein the bearing (202a, 202b) is formed by one or more belt conveyors (202a, 202b), by one or more link chains, by one or more belts or by one or more rollers, wherein
- each of the rotation/transport devices (144a, 144b, 144c, ... 144i, 144j 144k, 144l, 144Za, 144Zb, ...244a, 244b, ... 744a, 1000a, 1000b ...) of the 3 x 2 matrix arranged directly adjoining one another has a dedicated drive (203, 263) for rotation purposes and a dedicated drive (201, 261) for transportation purposes, wherein
- each of the 3 rows of the 3 x 2 matrix is a constituent part of a dedicated transport track (101, 102, 103), specifically an outer left transport track (101), a central transport track (102) and an outer right transport track (103), along which the transport container (701, 702) is transported, wherein
- the transfer device (140, 141, 142, ... 149, 144A, 244, 744, 1000, 1100, 1200, ... 1700, 1800) is assigned two process devices (121 122, ... 137, 138) forming a process device pair (121, 122; 123, 124; 125, 126... 137, 138), which are arranged lying opposite one another in relation to the transfer device (140, 141, 142, ... 149, 144A, 244, 744, 1000, 1100, 1200, ... 1700, 1800),
- wherein the transfer device (140, 141, 142, ... 149, 144A, 244, 744, 1000, 1100, 1200, ... 1700, 1800) serves to transfer the spectacle lens blanks between the respective left process device (121, 122, ... 137, 138) of the process device pair (121, 122, ... 137, 138) and the outer left transport track (101) and the central transport track (102),
- wherein the transfer devices (140, 141, 142, ... 149, 144A, 244, 744, 1000, 1100, 1200, ... 1700, 1800) serve to transfer the spectacle lens blanks between the respective right process device (121, 122, ... 137, 138) of the process device pair (121, 122, ... 137, 138) and the outer right transport track (103) and the central transport track (102),
- wherein a spectacle lens blank is supplied by way of the respective outer transport track (101, 103) to the respectively adjacent process device for value-adding processing, and
- wherein the central transport track (102) serves to transport the spectacle lens blank back to a preceding process device in the value-adding chain.

2. Use of the transfer device (140, 141, 142, ... 149, 144A, 244, 744, 1000, 1100, 1200, ... 1700, 1800) according to the preceding claim, **characterized in that** the bearing (202a, 202b) is alignable in discrete steps.

3. Use of the transfer device (140, 141, 142, ... 149, 144A, 244, 744, 1000, 1100, 1200, ... 1700, 1800) according to Claim 2, **characterized in that** the bearing (202a, 202b) is alignable in 45° steps.

4. Use of the transfer device (140, 141, 142, ... 149, 144A, 244, 744, 1000, 1100, 1200, ... 1700, 1800) according to any one of the preceding claims, **characterized in that** the bearing (202a, 202b) is alignable in discrete orientations.

5. Use of the transfer device (140, 141, 142, ... 149, 144A, 244, 744, 1000, 1100, 1200, ... 1700, 1800) according to Claim 4, **characterized in that** the bearing (202a, 202b) is alignable in exactly three discrete orientations or in exactly four discrete orientations or in exactly five discrete orientations or in exactly six discrete orientations or in exactly seven discrete orientations or in exactly eight discrete orientations.

6. Use of the transfer device (140, 141, 142, ... 149, 144A, 244, 744, 1000, 1100, 1200, ... 1700, 1800) according to Claim 1, **characterized in that**
- the drive (203, 263) for rotation purposes has a reversible embodiment and/or **in that**
- the drive (201, 261) for transportation purposes has a reversible embodiment.

7. Use of the transfer device (140, 141, 142, ... 149, 144A, 244, 744, 1000, 1100, 1200, ... 1700, 1800) according to any one of the preceding claims, **characterized in that** each of the rotation/transport devices (144a, 144b, 144c, ... 144i, 144j 144k, 144l, 144Za, 144Zb, ...244a, 244b, ... 744a, 1000a, 1000b ...) has a coupling device (745a, 745b, 745c) that is complementary to another of the rotation/transport devices (144a, 144b, 144c, ... 144i, 144j 144k, 144l, 144Za, 144Zb, ...244a, 244b, ... 744a, 1000a, 1000b ...) .

8. Use of the transfer device (140, 141, 142, ... 149, 144A, 244, 744, 1000, 1100, 1200, ... 1700, 1800) according to Claim 7, **characterized in that** the complementary coupling device (745a, 745b, 745c) is embodied to form a complementary mechanical coupling (746a, 746b, 746c) and/or a complementary open-loop and/or closed-loop control-type coupling.

9. Use of the transfer device (140, 141, 142, ... 149, 144A, 244, 744, 1000, 1100, 1200, ... 1700, 1800) according to any one of the preceding claims, **characterized in that** each of the rotation/transport devices (144a, 144b, 144c, ... 144i, 144j 144k, 144l, 144Za, 144Zb, ...244a, 244b, ... 744a, 1000a, 1000b ...) has a grid dimension (R x R) of between 20 cm x 20 cm and 50 cm x 50 cm.

10. Use of the transfer device (140, 141, 142, ... 149, 144A, 244, 744, 1000, 1100, 1200, ... 1700, 1800) according to Claim 9, **characterized in that** the bearing (202a, 202b) covers no more than 50% of an area defined by the grid dimension (R x R).

11. Use of the transfer device (140, 141, 142, ... 149, 144A, 244, 744, 1000, 1100, 1200, ... 1700, 1800) according to any one of the preceding claims, **characterized in that** each of the rotation/transport devices (144a, 144b, 144c, ... 144i, 144j 144k, 1441, 144Za, 144Zb, ...244a, 244b, ... 744a, 1000a, 1000b ...) has a detection device (210) for the transport container (701, 702).

12. Use of the transfer device (140, 141, 142, ... 149, 144A, 244, 744, 1000, 1100, 1200, ... 1700, 1800) according to any one of the preceding claims, **characterized in that** each of the rotation/transport devices (144a, 144b, 144c, ... 144i, 144j 144k, 144l, 144Za, 144Zb, ...244a, 244b, ... 744a, 1000a, 1000b ...) has a status reporting device (220) .

## Revendications

1. Utilisation d'un dispositif de transfert (140, 141, 142, ...149, 144A, 244, 744, 1000, 1100, 1200, ...1700, 1800) dans un conteneur de transport (701, 702) destiné à des verres de lunettes ou des flans de verres de lunettes,
le dispositif de transfert (140, 141, 142, ...149, 144A, 244, 744, 1000, 1100, 1200, ...1700, 1800) étant conçu
- sous la forme d'une matrice 3x2 de dispositifs de rotation/de transport (144a, 144b, 144c, ...144i, 144j 144k, 144l, 144Za, 144Zb, ...244a, 244b, ...744a, 1000a, 1000b ...) directement adjacents les uns aux autres, la matrice 3x2 définissant une structure à la manière d'un tableau à 3 lignes et 2 colonnes de zones ou de cellules associables, les dispositifs de rotation/de transport en vue de dessus comme des tableaux comportant les zones ou les cellules des 3 lignes et des 2 colonnes,
- chacun des dispositifs de rotation/transport (144a, 144b, 144c, ...144i, 144j 144k, 144l, 144Za, 144Zb, ...244a, 244b, ...744a, 1000a, 1000b ...) comportant un support (202a, 202b) pourvu d'une surface de support destiné au conteneur de transport (701, 702), la surface de support fournissant de l'espace à un ou plusieurs conteneurs de transport (701, 702), le support (202a, 202b) étant conçu au moins comme un support à trois points, le support (202a, 202b) étant formé par un ou plusieurs convoyeurs à bande (202a, 202b), par une ou plusieurs chaînes à maillons, par une ou plusieurs courroies ou par plusieurs rouleaux,
- chacun des dispositifs de rotation/transport (144a, 144b, 144c, ...144i, 144j 144k, 144l, 144Za, 144Zb, ...244a, 244b, ...744a, 1000a, 1000b ...) de la matrice 3x2 comportant un entraînement en rotation propre (203, 263) et un entraînement de transport propre (201, 261),
- chacune des 3 lignes de la matrice 3x2 faisant partie d'une voie de transport propre (101, 102, 103), à savoir une voie de transport extérieure gauche (101), une voie de transport centrale (102) et une voie de transport extérieure droite (103), le long desquelles le conteneur de transport (701, 702) est transporté,
- le dispositif de transfert (140, 141, 142, ...149, 144A, 244, 744, 1000, 1100, 1200, ...1700, 1800) étant associés à deux dispositifs de traitement (121, 122, ...137, 138) qui forment une paire de dispositifs de traitement (121, 122; 123, 124; 125, 126 ...137, 138) et qui sont disposés en vis-à-vis par rapport au dispositif de transfert (140, 141, 142, ...149, 144A, 244, 744, 1000, 1100, 1200, ...1700, 1800),
- le dispositif de transfert (140, 141, 142, ...149, 144A, 244, 744, 1000, 1100, 1200, ...1700, 1800) servant à un transfert des flans de verre de lunettes entre le dispositif de traitement gauche respectif (121, 122, ...137, 138) de la paire de dispositifs de traitement (121, 122, ...137, 138) et de la voie de transport extérieure gauche (101) ainsi que de la voie de transport centrale (102),
- les dispositifs de transfert (140, 141, 142, ...149, 144A, 244, 744, 1000, 1100, 1200, ...1700, 1800) servant à un transfert des flans de verre de lunettes entre le dispositif de traitement droit respectif (121, 122, ...137, 138) de la paire de dispositifs de traitement (121, 122, ...137, 138) et de la voie de transport extérieure droite (103) ainsi que de la voie de transport centrale (102),
- un flan de verre de lunettes étant amené, par le biais de la voie de transport extérieure respective (101, 103), au dispositif de traitement adjacent en vue d'un traitement valorisant, et
- la voie de transport centrale (102) servant au transport de retour du flan de verre de lunettes vers un dispositif de traitement précédent dans la chaîne de valorisation.

2. Utilisation du dispositif de transfert (140, 141, 142, ...149, 144A, 244, 744, 1000, 1100, 1200, ...1700, 1800) selon la revendication précédente, **caractérisée en ce que** le support (202a, 202b) peut être orienté par pas discrets.

3. Utilisation du dispositif de transfert (140, 141, 142, ...149, 144A, 244, 744, 1000, 1100, 1200, ...1700, 1800) selon la revendication 2, **caractérisé en ce que** le support (202a, 202b) peut être orienté par pas de 45°.

4. Utilisation du dispositif de transfert (140, 141, 142, ...149, 144A, 244, 744, 1000, 1100, 1200, ...1700,1800) selon l'une des revendications précédentes, **caractérisée en ce que** le support (202a, 202b) peut être orienté selon des orientations discrètes.

5. Utilisation du dispositif de transfert (140, 141, 142, ...149, 144A, 244, 744, 1000, 1100, 1200, ...1700, 1800) selon la revendication 4, **caractérisé en ce que** le support (202a, 202b) peut être orienté selon exactement trois orientations discrètes ou selon exactement quatre orientations discrètes ou selon exactement cinq orientations discrètes ou selon exactement six orientations discrètes ou selon exactement sept orientations discrètes ou selon exactement huit orientations discrètes.

6. Utilisation du dispositif de transfert (140, 141, 142, ...149, 144A, 244, 744, 1000, 1100, 1200, ...1700, 1800) selon la revendication 1, **caractérisée en ce que**
- l'entraînement en rotation (203, 263) est conçu pour être réversible et/ou
- l'entraînement de transport (201, 261) est conçu pour être réversible.

7. Utilisation du dispositif de transfert (140, 141, 142, ...149, 144A, 244, 744, 1000, 1100, 1200, ...1700, 1800) selon l'une des revendications précédentes, **caractérisé en ce que** chacun des dispositifs de rotation/transport (144a, 144b, 144c, ...144i, 144j, 144k, 144l, 144Za, 144Zb, ...244a, 244b, ...744a, 1000a, 1000b ...) comporte un dispositif d'accouplement (745a, 745b, 745c) complémentaire d'un autre des dispositifs de rotation/transport (144a, 144b, 144c, ...144i, 144j 144k, 1441, 144Za, 144Zb, ...244a, 244b, ...744a, 1000a, 1000b ...) .

8. Utilisation du dispositif de transfert (140, 141, 142, ...149, 144A, 244, 744, 1000, 1100, 1200, ...1700, 1800) selon la revendication 7, **caractérisée en ce que** le dispositif d'accouplement complémentaire (745a, 745b, 745c) est conçu comme un accouplement mécanique complémentaire (746a, 746b, 746c) et/ou un accouplement de commande et/ou de régulation complémentaire.

9. Utilisation du dispositif de transfert (140, 141, 142, ...149, 144A, 244, 744, 1000, 1100, 1200, ...1700, 1800) selon l'une des revendications précédentes, **caractérisée en ce que** chacun des dispositifs de rotation/transport (144a, 144b, 144c, ...144i, 144j 144k, 1441, 144Za, 144Zb, ...244a, 244b, ...744a, 1000a, 1000b ...) a une dimension de trame (R x R) comprise entre 20 cm x 20 cm et 50 cm x 50 cm.

10. Utilisation du dispositif de transfert (140, 141, 142, ...149, 144A, 244, 744, 1000, 1100, 1200, ...1700, 1800) selon la revendication 9, **caractérisée en ce que** le support (202a, 202b) recouvre au plus 50 % d'une zone définie par la dimension de trame (R x R).

11. Utilisation du dispositif de transfert (140, 141, 142, ...149, 144A, 244, 744, 1000, 1100, 1200, ...1700, 1800) selon l'une des revendications précédentes, **caractérisée en ce que** chacun des dispositifs de rotation/transport (144a, 144b, 144c, ...144i, 144j, 144k, 1441, 144Za, 144Zb, ...244a, 244b, ...744a, 1000a, 1000b ...) comporte un dispositif de détection (210) destiné au conteneur de transport (701, 702).

12. Utilisation du dispositif de transfert (140, 141, 142, ...149, 144A, 244, 744, 1000, 1100, 1200, ...1700, 1800) selon l'une des revendications précédentes, **caractérisée en ce que** chacun des dispositifs de rotation/transport (144a, 144b, 144c, ...144i, 144j 144k, 1441, 144Za, 144Zb, ...244a, 244b, ...744a, 1000a, 1000b ...) comporte un dispositif de rapport d'état (220).
